# EUROPEAN PATENT SPECIFICATION

(11) **EP 4 361 710 B1**
(45) Date of publication and mention of the grant of the patent: **28.10.2026**
(21) Application number: 22832222.8
(22) Date of filing: 01.07.2022
(51) Int. Cl.: G02F 1/01, B60J 3/04, E06B 9/24, G02F 1/1339, G02F 1/1345, B32B 17/10

(54) **DIMMING COMPONENT AND MANUFACTURING METHOD THEREFOR, LIGHT-TRANSMITTING ASSEMBLY, AND VEHICLE**
DIMMKOMPONENTE UND HERSTELLUNGSVERFAHREN DAFÜR, LICHTÜBERTRAGUNGSANORDNUNG UND FAHRZEUG
COMPOSANT DE GRADATION ET SON PROCÉDÉ DE FABRICATION, ENSEMBLE DE TRANSMISSION DE LUMIÈRE ET VÉHICULE

(30) Priority: 01.07.2021 CN 202110749492; 30.08.2021 CN 202111004531
(43) Date of publication of application: 01.05.2024
(73) Proprietor: Fuyao Glass Industry Group Co., Ltd., Fuqing, Fujian 350300 (CN)
(72) Inventor: SHUI, Fang, Fuzhou, Fujian 350301 (CN); LIN, Shou, Fuzhou, Fujian 350301 (CN); FENG, Tao, Fuzhou, Fujian 350301 (CN); WANG, Jiafu, Fuzhou, Fujian 350301 (CN); ZHENG, Guoxin, Fuzhou, Fujian 350301 (CN)
(74) Representative: Mewburn Ellis LLP
(86) International application number: PCT/CN2022/103414
(87) International publication number: WO 2023/274410

(56) References cited:
- WO-A1-2018/139474
- WO-A1-2018/221559
- WO-A1-2020/054445
- CN-A- 104 851 961
- CN-A- 113 671 729
- CN-A- 113 867 012
- JP-A- 2017 151 167
- JP-A- 2019 105 680
- JP-A- 2020 112 741
- JP-A- 2020 112 741
- US-A1- 2009 302 762
- US-A1- 2016 138 328
- US-A1- 2018 173 035
- US-A1- 2022 035 197

## Description

### TECHNICAL FIELD

This disclosure relates to the field of vehicle accessory technology, and in particular to a dimming member and a method for manufacturing the same, a light-transmitting assembly, and a vehicle.

### BACKGROUND

Vehicles are one of the important means of transportation for humans. Window glass of some vehicles has dimming effects due to addition of dimming members, so that driving environments are more comfortable and more luxurious. The dimming member is an electronic light control product. By means of electrical control, whether the dimming member is transparent or not can be controlled. However, if structural arrangement of the dimming member is unreasonable, a function of the dimming member will be affected.

US2016138328A1 relates to multilayer film (1) with electrically switchable optical properties, comprising, arranged sheet-wise in order, at least: -a first carrier film (5), -a first electrically conductive layer (3), -an active layer (2), -a second electrically conductive layer (4) and -a second carrier film (6), wherein -the multilayer film (1) has at least two circumferential separating lines (16), which separate an insulated edge region (18) from the first electrically conductive layer (3) and the second electrically conductive layer (4), -the first carrier film (5) and the second carrier film (6) are welded in at least a part of the insulated edge region (18) to form a sealed region (7), and -the separating lines (16) have a width of 10 µm to 500 µm.

WO2020/054445A1 discloses a method of manufacturing a liquid crystal light control film. JP2020112741A relates to a light control sheet having a light control layer made of liquid crystal material such as polymer network liquid crystal (PNLC), which has a structure with improved handling, design, and waterproofness at the construction site by eliminating disadvantages that there is a high possibility that it will come into contact with moisture, acid, ultraviolet rays, etc. at the edge (periphery) and it is likely to cause the deterioration of the light control layer. SOLUTION: The light control sheet has a constitution that a groove with a depth that penetrates the light control layer is formed on the outer periphery near the end that defines the outer shape of the light control sheet, and the inside of the groove from which the light control layer is removed is filled with a sealing material other than the liquid crystal composition.

### SUMMARY

The invention is defined by the independent claims. A dimming member and a method for manufacturing the same, a light-transmitting assembly, and a vehicle are provided. Due to a structural design of the dimming member, the dimming member can be ensured to function normally.

In a first aspect, a dimming member is provided as defined in appended claim 1. Further aspects of the dimming member are defined in the dependent claims.

In a second aspect, a method of manufacturing a dimming member is further provided as defined in appended claim 11. The method includes, *inter alia,* the following. A dimming film is provided. The dimming film includes a first film-layer, a dimming layer, and a second film-layer that are stacked. The first film-layer includes a first substrate and a first conductive layer that are stacked. The second film-layer includes a second substrate and a second conductive layer that are stacked. The dimming layer is disposed between the first conductive layer and the second conductive layer. The dimming film has a first region and a second region. The first film-layer in the first region and the second film-layer in the first region are peeled off in a direction away from each other, to expose the dimming layer in the first region. At least part of the dimming layer on the first conductive layer in the first region is removed. A first electrode is attached to the first conductive layer in the first region. At least part of the dimming layer on the second conductive layer in the first region is removed. A second electrode is attached to the second conductive layer in the first region.

The first film-layer in the first region and the second film-layer in the first region are peeled off in the direction away from each other, to expose the dimming layer in the first region as follows. The dimming film in the first region is cut along a first preset path to form a first sub-region. The first film-layer in the first sub-region and the second film-layer in the first sub-region are peeled off in a direction away from each other, to expose the dimming layer in the first sub-region. The dimming film in the first region is cut along a second preset path to form a second sub-region. The first film-layer in the second sub-region and the second film-layer in the second sub-region are peeled off in a direction away from each other, to expose the dimming layer in the second sub-region.

The at least part of the dimming layer on the first conductive layer in the first region is removed as follows. The dimming layer on the first conductive layer in the first sub-region and the dimming layer on the second conductive layer in the first sub-region are removed.

The first electrode is attached to the first conductive layer in the first region as follows. A first adhesive layer is formed on a surface, away from the first substrate, of the first conductive layer in the first region, or the first adhesive layer is formed on a surface of the first electrode. The first electrode is attached to the first conductive layer in the first region through the first adhesive layer.

After attaching the second electrode to the second conductive layer in the first region, the method further includes the following. A sealing structure is formed at a periphery of the dimming film. The first substrate at the sealing structure and the second substrate at the sealing structure are connected to each other.

The sealing structure is formed at the periphery of the dimming film as follows. A first machining member and a second machining member are provided. The dimming film is disposed between the first machining member and the second machining member. The first machining member abuts against the first substrate of the dimming film. The second machining member abuts against the second substrate of the dimming film. The sealing structure at the periphery of the dimming film is formed by cooperation between the first machining member and the second machining member. The first machining member is rotatable. The second machining member vibratable.

The at least one groove structure includes a stepped structure or a trench structure.

A dam structure is disposed around a periphery of the at least one groove structure. A distance between the dam structure and the trench structure ranges from 0.5 mm to 10 mm.

A longitudinal section of the sealing structure at the groove structure is in a V shape, a U shape, a W shape, a M shaped, a X shape, a I shape, an II shape, a III shape, or a combination thereof.

The functional layer includes a first conductive layer, a dimming layer, and a second conductive layer stacked in sequence.

The dimming member further defines at least one notch.

A method for manufacturing a dimming member is further provided in the present disclosure. The method includes the following. (1) A dimming member is provided. The dimming member includes a first substrate, a functional layer, and a second substrate that are stacked in sequence. (2) A machining tooling is disposed at one side of the first substrate away from the functional layer, and a carrying platform is disposed at one side of the second substrate away from the functional layer. (3) The first substrate is compressed by the tooling, the tooling and the second substrate are vibrated back and forth in a direction parallel to a direction of the tooling, and the tooling is vibrated back and forth relative to the carrying platform in a horizontal direction parallel to a ground plane, to generate local friction at the functional layers, to make part of the functional layer close to the tooling be easily smashed and pushed to two sides, and make part of the first substrate and part of the second substrate that are near the tooling be in a molten state. (4) A groove structure is defined at the functional layer under the action of the local friction. After the first substrate in a high-temperature molten state and the second substrate in a high-temperature molten state abut against each other, both the first substrate and the second substrate are cooled and cured to form a sealing structure. (5) At least one complete sealing structure is formed at a periphery of the dimming member, to complete edge sealing.

A vibration frequency ranges from 20 KHz to 40 KHz.

The tooling includes at least one concave-convex pattern parallel to an outer side of the tooling. The concave-convex pattern on the tooling has a width ranging from 0.2 mm to 10 mm.

The groove structure extends through the functional layer at a periphery of the functional layer, and is in communication with a surface of the functional layer close to the first substrate and/or a surface of the functional layer close to the second substrate.

The dimming member is further provided with a dam structure around a periphery of the groove structure. After forming the at least one sealing structure at the periphery of the dimming member to complete the edge sealing, the method further includes the following. The dam structure is cut off.

Before defining the groove structure, a filling portion is disposed on a surface of the first substrate away from the functional layer and/or a surface of the second substrate away from the functional layer.

In a stacked direction, a thickness of the filling portion is 1/3 to 1/2 times a thickness of the first substrate or a thickness of the second substrate.

After or while defining the groove structure, a filling portion is disposed at one side of the groove structure away from the sealing structure.

In a third aspect, a light-transmitting assembly is further provided in the present disclosure. The light-transmitting assembly includes a first light-transmitting member, a second light-transmitting member, and the dimming member. The dimming member is disposed between the first light-transmitting member and the second light-transmitting member.

In a fifth aspect, a vehicle is further provided in the present disclosure. The vehicle includes the light-transmitting assembly.

### BRIEF DESCRIPTION OF THE DRAWINGS

To describe technical solutions in embodiments of the present disclosure more clearly, the following briefly introduces the accompanying drawings required for describing the implementations of the present disclosure. Apparently, the accompanying drawings in the following description are some implementations of the present disclosure, and for those of ordinary skill in the art, other accompanying drawings can also be obtained according to these accompanying drawings without creative efforts.
FIG. 1 is a schematic view of a vehicle provided in an embodiment of the present disclosure.
FIG. 2 is a schematic view of a light-transmitting assembly provided in an embodiment of the present disclosure.
FIG. 3 is a sectional view of the light-transmitting assembly illustrated in FIG. 2 taken along line A-A.
FIG. 4 is a schematic view of a dimming member provided in an embodiment of the present disclosure.
FIG. 5 is a sectional view of the dimming member illustrated in FIG. 4 taken along line B-B.
FIG. 6 is a sectional view of the dimming member illustrated in FIG. 4 taken along line C-C.
FIG. 7 is a view of a connection relationship between a first electrode and a first insulating member provided in an embodiment of the present disclosure.
FIG. 8 is a view of a connection relationship between a second electrode and a second insulating member provided in an embodiment of the present disclosure.
FIG. 9 is another sectional view of the dimming member illustrated in FIG. 4 taken along line B-B.
FIG. 10 is a flowchart of a method for manufacturing a dimming member provided in an embodiment of the present disclosure.
FIG. 11 is a structural view corresponding to the method for manufacturing a dimming member illustrated in FIG. 10.
FIG. 12 is a sectional view of a structure illustrated in FIG. 11 taken along line D-D.
FIG. 13 is a structural view corresponding to the method for manufacturing a dimming member illustrated in FIG. 10.
FIG. 14 is a structural view corresponding to the method for manufacturing a dimming member illustrated in FIG. 10.
FIG. 15 is a structural view corresponding to the method for manufacturing a dimming member illustrated in FIG. 10.
FIG. 16 is a structural view corresponding to the method for manufacturing a dimming member illustrated in FIG. 10.
FIG. 17 is a structural view corresponding to the method for manufacturing a dimming member illustrated in FIG. 10.
FIG. 18 is a structural view corresponding to the method for manufacturing a dimming member illustrated in FIG. 10.
FIG. 19 is a view of an arrangement of a first electrode and a second electrode provided in an embodiment of the present disclosure.
FIG. 20 is a view of an arrangement of a first electrode and a second electrode provided in another embodiment of the present disclosure.
FIG. 21 is a flowchart of a method for manufacturing a dimming member provided in another embodiment of the present disclosure.
FIG. 22 is a structural view corresponding to the method for manufacturing a dimming member illustrated in FIG. 21.
FIG. 23 is a structural view corresponding to the method for manufacturing a dimming member illustrated in FIG. 21.
FIG. 24 is a structural view corresponding to the method for manufacturing a dimming member illustrated in FIG. 21.
FIG. 25 is a structural view corresponding to the method for manufacturing a dimming member illustrated in FIG. 21.
FIG. 26 is a structural view corresponding to the method for manufacturing a dimming member illustrated in FIG. 21.
FIG. 27 is a structural view corresponding to the method for manufacturing the dimming member illustrated in FIG. 21.
FIG. 28 is a flowchart of a method for manufacturing a dimming member provided in yet another embodiment of the present disclosure.
FIG. 29 is a structural view corresponding to the method for manufacturing a dimming member illustrated in FIG. 28.
FIG. 30 is a flowchart of a method for manufacturing a dimming member provided in yet another embodiment of the present disclosure.
FIG. 31 is a structural view corresponding to the method for manufacturing a dimming member illustrated in FIG. 30.
FIG. 32 is a flowchart of a method for manufacturing a dimming member provided in yet another embodiment of the present disclosure.
FIG. 33 is a structural view corresponding to the method for manufacturing a dimming member illustrated in FIG. 32.
FIG. 34 is a structural view corresponding to the method for manufacturing a dimming member illustrated in FIG. 32.
FIG. 35 is a flowchart of a method for manufacturing a dimming member provided in yet another embodiment of the present disclosure.
FIG. 36 is a structural view corresponding to the method for manufacturing a dimming member illustrated in FIG. 35.
FIG. 37 is a structural view corresponding to the method for manufacturing a dimming member illustrated in FIG. 35.
FIG. 38 is a flowchart of a method for manufacturing a dimming member provided in yet another embodiment of the present disclosure.
FIG. 39 is a structural view corresponding to the method for manufacturing a dimming member illustrated in FIG. 38.
FIG. 40 is a structural view corresponding to the method for manufacturing a dimming member illustrated in FIG. 38.
FIG. 41 is a flowchart of a method for manufacturing a dimming member provided in yet another embodiment of the present disclosure.
FIG. 42 is a structural view corresponding to the method for manufacturing a dimming member illustrated in FIG. 41.
FIG. 43 is a structural view corresponding to the method for manufacturing a dimming member illustrated in FIG. 41.
FIG. 44 is a structural view corresponding to the method for manufacturing a dimming member illustrated in FIG. 41.
FIG. 45 is a structural view corresponding to the method for manufacturing a dimming member illustrated in FIG. 41.
FIG. 46 is a schematic view of a sealing structure provided in an embodiment of the present disclosure.
FIG. 47 is a schematic view of a sealing structure provided in another embodiment of the present disclosure.
FIG. 48 is a schematic top view of a dimming film provided in implementation (1) of the present disclosure.
FIG. 49 is a schematic sectional view in FIG. 48 taken along line I-I.
FIG. 50 is a side view of edge sealing of a first substrate with a filling material provided in implementation (2) of the present disclosure.
FIG. 51 is a side view of a sealing structure of a filling portion of a first substrate molten provided in implementation (3) of the present disclosure.
FIG. 52 is a schematic sectional view of a dimming film with multiple sealing structures provided in implementation (4) of the present disclosure.
FIG. 53 is a schematic view of a stepped structure provided in implementation (5) of the present disclosure.
FIG. 54 is a schematic top view of a dimming film provided in implementation (6) of the present disclosure.
FIG. 55 is a schematic flowchart of a method of edge sealing for a dimming film provided in implementation (7) of the present disclosure.
FIG. 56 is a schematic view of a tooling and a carrying platform provided in implementation (8) of the present disclosure.
FIG. 57 is a schematic sectional view of a dimming assembly provided in implementation (9) of the present disclosure.
FIG. 58 is a schematic top view of a vehicle provided in implementation (10) of the present disclosure.

### DETAILED DESCRIPTION

The technical solutions in embodiments of the present disclosure will be clearly and completely described below with reference to the accompanying drawings of embodiments of the present disclosure. Apparently, the embodiments described are merely some rather than all of embodiments of the present disclosure.

A term "embodiment" or "implementation" referred to herein means that a particular feature, structure, or characteristic described in conjunction with embodiments or implementations may be contained in at least one embodiment of the present disclosure. The phrase appearing in various places in the specification does not necessarily refer to the same embodiment, nor does it refer an independent or alternative embodiment that is mutually exclusive with other embodiments. It is expressly and implicitly understood by those skilled in the art that an embodiment described herein may be combined with other embodiments.

The following introduces various aspects about a dimming member provided in the present disclosure with reference to Embodiment 1 and Embodiment 2. Embodiment 1 is from a prior application with application no. 202111004531.4, and Embodiment 2 is from a prior application with application no. 202110749492.4. It may be noted that although signs of various parts of a dimming member are different in Embodiment 1 and Embodiment 2, various parts of the dimming member are substantially the same in Embodiment 1 and Embodiment 2. In other words, features in Embodiment 1 can be applied to Embodiment 2, and in the same way, features in Embodiment 2 can also be applied to Embodiment 1.

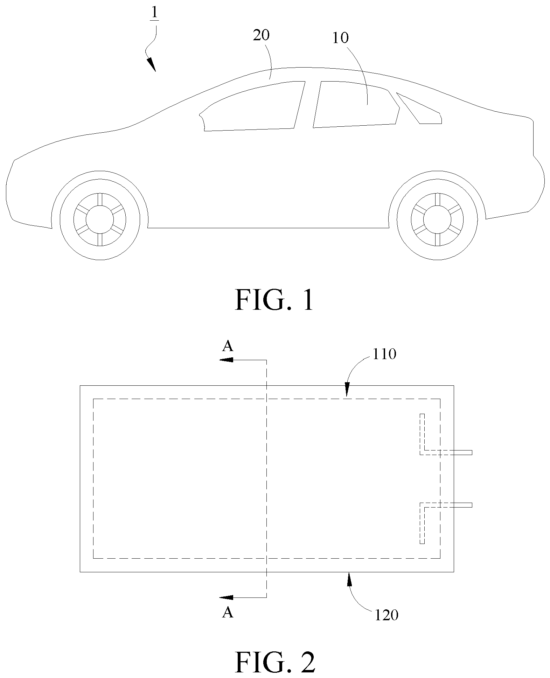

### Embodiment 1 (FIG. 1 to FIG. 47)

As illustrated in FIG. 1, a vehicle 1 is provided in the present disclosure. The vehicle 1 may be, but is not limited to, a sedan, a multi-purpose automobile (MPV), a sport/suburban utility vehicle (SUV), an off-road vehicle (ORV), a pickup, a van, a bus, a truck, etc.

The vehicle 1 includes a light-transmitting assembly 10 described in any one of following implementations. The vehicle 1 may further include a frame 20. The light-transmitting assembly 10 is directly or indirectly carried on the frame 20.

The light-transmitting assembly 10 allows light to pass through, to ensure sufficient light in the vehicle and provide a field of view for a person in the vehicle. The light-transmitting assembly 10 may be a windshield window, a rear window, a sunroof, a door window, a rear side window, etc., of the vehicle 1.

The light-transmitting assembly 10 can change light transmittance (thus causing a change in haze). In other words, the light-transmitting assembly 10 is highly transparent when being powered on, and is blurred and opaque when being powered off. The so-called opacity does not mean that light is completely blocked by the light-transmitting assembly 10, but means that the light-transmitting assembly 10 blocks most of the light, so that the inside of the vehicle cannot be seen from the outside of the vehicle, the outside of the vehicle cannot be seen from the inside the vehicle, and some light can still enter the vehicle through the light-transmitting assembly 10, thereby avoiding complete darkness in the vehicle.

As illustrated in FIG. 2, a light-transmitting assembly 10 is further provided in the present disclosure. The light-transmitting assembly 10 includes a light-transmitting member 120 and a dimming member 110 described in any one of following implementations. The dimming member 110 is carried on the light-transmitting member 120. The light-transmitting member 120 is made of a transparent material. The transparent material of the light-transmitting member 120 may be, but is not limited to, glass, plastic, etc.

The light-transmitting member 120 may include a first light-transmitting member 121 and a second light-transmitting member 122. The dimming member 110 is disposed between the first light-transmitting member 121 and the second light-transmitting member 122, so that the dimming member 110 can be protected by the first light-transmitting member 121 and the second light-transmitting member 122.

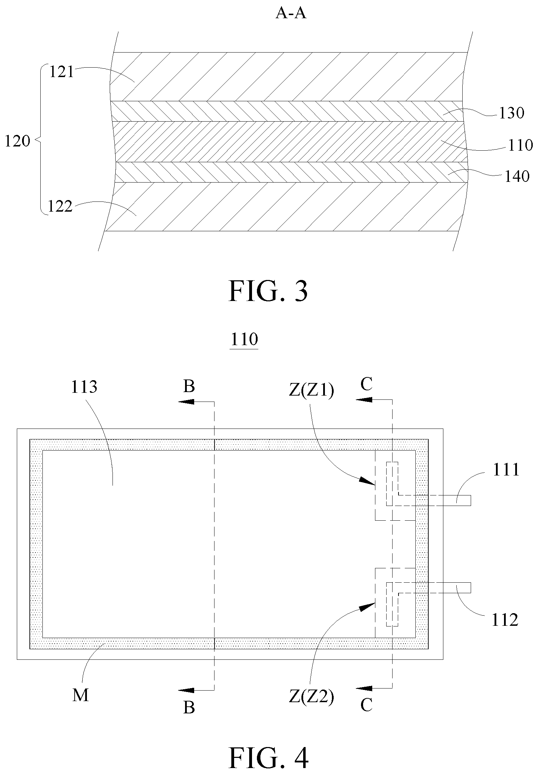

As illustrated in FIG. 3, the light-transmitting assembly 10 further includes a first connecting layer 130 and a second connecting layer 140. The first light-transmitting member 121 is adhered to the dimming member 110 through the first connecting layer 130. The second light-transmitting member 122 is adhered to the dimming member 110 through the second connecting layer 140.

A shape of the light-transmitting assembly 10 may be, but is not limited to, a circle, an ellipse, a square, a rectangle, etc. The light-transmitting assembly 10 may be applied to, but is not limited to, a window of a vehicle 1, a window of a house, a partition door of a bathroom, a partition door of a conference room, etc.

The following introduces the dimming member 110 in the light-transmitting assembly 10 provided in the above embodiments in detail with reference to the accompanying drawings.

As illustrated in FIG. 4 to FIG. 6, a dimming member 110 is further provided in the present disclosure. The dimming member 110 includes a first electrode 111, a second electrode 112, and a dimming film 113. The dimming film 113 includes a first substrate 1131a, a first conductive layer 1131b, a dimming layer 1133, a second conductive layer 1132b, and a second substrate 1132a that are stacked in sequence. The dimming layer 1133, the first conductive layer 1131b, and the second conductive layer 1132b cooperatively define an accommodating space Z. The first electrode 111 and the second electrode 112 are disposed in the accommodating space Z. The first electrode 111 is attached to the first conductive layer 1131b at one side of the first conductive layer 1131b away from the first substrate 1131a, so that the first electrode 111 is electrically connected to the first conductive layer 1131b. The second electrode 112 is attached to the second conductive layer 1132b at one side of the second conductive layer 1132b away from the second substrate 1132a, so that the second electrode 112 is electrically connected to the second conductive layer 1132b.

The first substrate 1131a and the second substrate 1132a each may be preferably made of polyethylene terephthalate (PET), or may be made of a polymer such as polyvinyl alcohol (PVA), polyimide (PI), polyethylene naphthalate (PEN), etc.

The first conductive layer 1131b and the second conductive layer 1132b each may be preferably made of tin-doped indium oxide (also referred to as indium tin oxide, i.e., ITO), may be made of fluorine-doped tin oxide (FTO) or aluminum-doped zinc oxide (AZO), or may be made of a material formed by these materials doped with gold, silver, copper, etc.

The dimming layer 1133 may be made of a dimming material, that is produced by roll-to-roll, such as polymer dispersed liquid crystal (PDLC), electrochromic (EC), nano light valve (LV), suspended-particle devices (SPD), liquid crystal (LC).

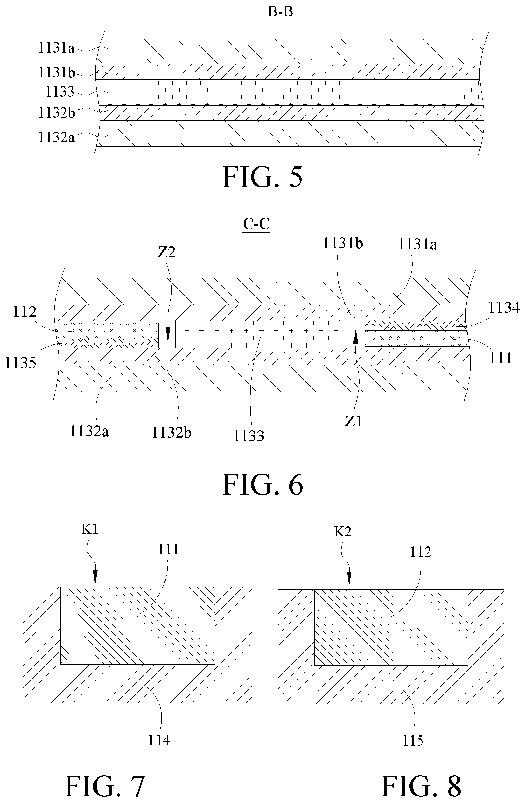

Optionally, as illustrated in FIG. 7, the dimming member 110 may further include a first insulating member 114 for wrapping the first electrode 111. The first insulating member 114 defines a first opening K1 to expose one side of the first electrode 111. The first electrode 111 is electrically connected to the first electrically conductive layer 1131b at one side of the first electrode 111 exposed beyond the first opening K1. The first insulating member 114 is connected to the second conductive layer 1132b at one side of the first insulating member 114 away from the first opening K1, so that the first electrode 111 is insulated from the second conductive layer 1132b. As illustrated in FIG. 8, the dimming member 110 may further include a second insulating member 115 for wrapping the second electrode 112. The second insulating element 115 defines a second opening K2 to expose one side of the second electrode 112. The second insulating member 115 is electrically connected to the second conductive layer 1132b at one side of the second electrode 112 exposed beyond the second opening K2. The second electrode 112 is connected to the first conductive layer 1131b at one side of the second insulating member 115 away from the second opening K2, so that the second electrode 112 is insulated from the first conductive layer 1131b.

The first electrode 111 and the second electrode 112 are configured to be connected to a power source. The power source may be a current source or a voltage source. When the dimming member 110 is powered off, the dimming layer 1133 is in a first state. The dimming layer 1133 in the first state can block most of light, so that the dimming member 110 is in an opaque state, and at this time, the dimming member 110 has the highest haze level and a relatively large haze. When the dimming member 110 is powered on, an electric field is formed between the first conductive layer 1131b and the second conductive layer 1132b, and the dimming layer 1133 is converted from the first state to a second state under the action of the electric field. The dimming layer 1133 in the second state can allow most of light to pass through, so that the dimming member 110 is in a transparent state, and at this time, the dimming member 110 has the lowest haze level and a minimal haze.

Optionally, in some implementations, by controlling the intensity of the electric field formed between the first conductive layer 1131b and the second conductive layer 1132b, the dimming layer 1133 can be in a third state, so that the dimming member 110 is in a state between transparent and opaque. Further optionally, the third state includes multiple sub-states, the dimming member 110 includes multiple different haze levels, and each sub-state corresponds to a haze level. When the intensity of the electric field is greater, the haze level of the dimming member 110 is lower. In other words, the transparency of the dimming member 110 is greater, so that the dimming member 110 can be switched among multiple (greater than or equal to four) different haze levels, and thus application scenarios of the dimming member 110 can be expanded.

An orthographic projection of the dimming film 113 on the first light-transmitting member 121 falls entirely in a range where the first light-transmitting member 121 is located. An orthographic projection of the dimming film 113 on the second light-transmitting member 122 falls entirely in a range where the second light-transmitting member 122 is located. In other words, the length of the dimming film 113 is less than or equal to each of the length of the first light-transmitting member 121 and the length of the second light-transmitting member 122, and the width of the dimming film 113 is less than or equal to each of the width of the first light-transmitting member 121 and the width of the second light-transmitting member 122, which is beneficial to protecting the dimming film 113 from external damage.

Further, the first electrode 111 extends from the dimming film 113 and exceeds an edge of the first light-transmitting member 121 and an edge of the second light-transmitting member 122, and the second electrode 112 extends from the dimming film 113 and exceeds the edge of the first light-transmitting member 121 and the edge of the second light-transmitting member 122. In other words, part of the first electrode 111 is exposed beyond the first light-transmitting member 121 and the second light-transmitting member 122, and part of the second electrode 112 is exposed beyond the first light-transmitting member 121 and the second light-transmitting member 122, thereby facilitating a connection between the first electrode 111 and the power source and a connection between the second electrodes 112 and the power source.

In the related art, an electrode is directly inserted into a dimming layer, and the electrode is spaced apart from a conductive layer. However, this arrangement manner may cause undesirable consequences. Specifically, on the one hand, since the dimming layer is generally made of an insulating material, an electrical connection is not easily formed between the electrode and the conductive layer, and even if the electrical connection is formed, the dimming layer between the electrode and the conductive layer will act as a resistor with relatively large resistance. When the dimming member is powered on, part of the dimming layer between the electrode and the conductive layer may generate heat due to high resistance, and the dimming member may be damaged due to heat accumulation after long-time operation. Meanwhile, a voltage distributed to the conductive layer also becomes smaller due to the high resistance of the dimming layer, so that intensity of an electric field formed by the conductive layer is not great enough, and thus the dimming member always has a certain haze and cannot be in a highly transparent state. On the other hand, inserting the electrode into the dimming layer will cause part of the dimming layer inserted with the electrode to be too thick. When the dimming member is sandwiched between the first light-transmitting member and the second light-transmitting member, the first light-transmitting member and the second light-transmitting member are prone to fragmentation due to an excessive stress, and even if the first light-transmitting member and the second light-transmitting member are not fragmented, bubbles will be generated due to the inconsistent thickness.

However, in the present disclosure, the first electrode 111 and the second electrode 112 each are disposed in the accommodating space Z cooperatively defined by the first conductive layer 1131b, the dimming layer 1133, and the second conductive layer 1132b, so that part of the dimming member 110 defining the accommodating space Z will not be too thick, thereby avoiding a problem of fragmentation and bubbles generated in a subsequent process of mounting the first light-transmitting member 121 and the second light-transmitting member 122. In addition, the first electrode 111 is attached to and electrically connected to the first conductive layer 1131b, and no dimming layer 1133 exists between the first electrode 111 and the first conductive layer 1131b. The second electrode 112 is attached to and electrically connected to the second conductive layer 1132b, and no dimming layer 1133 exists between the second electrode 112 and the second conductive layer 1132b. Therefore, technical problems, that the dimming member 110 is damaged due to heat accumulation caused by the dimming layer 1133 and the dimming member 110 always has a certain haze due to a distributed voltage of the dimming layer 1133, can be overcome. Therefore, the dimming member 110 provided in the present disclosure can be ensured to function normally.

As illustrated in FIG. 4 and FIG. 6, the accommodating space Z includes a first sub-space Z1 and a second sub-space Z2 spaced from the first sub-space Z1. The first electrode 111 is disposed in the first sub-space Z1, and the second electrode 112 is disposed in the second sub-space Z2. The first sub-space Z1 is spaced apart from the second sub-space Z2, which means that no first electrode 111 and no second electrode 112 exist in a spacing region between the first sub-space Z1 and the second sub-space Z2, so that part of the dimming layer 1133 can be disposed in the spacing region, without causing the technical problems brought about by the above dimming layer 1133. It may be understood that with arrangement of the dimming layer 1133 in the spacing region, a total adjustable region of the dimming member 110 can be increased, that is, the haze can also be adjusted in the spacing region. A shape of the first sub-space Z1 and a shape of the second sub-space Z2 each may be, but not limited to, a circle, a square, a rectangle, an ellipse, a triangle, etc.

As illustrated in FIG. 6, the dimming member 110 further includes a first adhesive layer 1134 and a second adhesive layer 1135. The first electrode 111 is adhered to and electrically connected to the first conductive layer 1131b through the first adhesive layer 1134. The second electrode 112 is adhered to and electrically connected to the second conductive layer 1132b through the second adhesive layer 1135. The first adhesive layer 1134 and the second adhesive layer 1135 each are made of a conductive material and have a certain adhesive property, which may specifically be, but not limited to, a conductive adhesive cloth, a conductive silver paste, an anisotropic conductive adhesive, a metal adhesive tape, etc.

It may be understood that due to process limitations, a surface of the first conductive layer 1131b, a surface of the second conductive layer 1132b, a surface of the first electrode 111, and a surface of the second electrode 112 each are difficult to realize absolute flatness. The first conductive layer 1131b and the first electrode 111 will be exemplarily described below. If the first conductive layer 1131b is in direct contact with and electrically connected to the first electrode 111, a gap must exist between the first conductive layer 1131b and the first electrode 111, and existence of the gap will cause an increase in conduction resistance between the first electrode 111 and the first conductive layer 1131b. In this embodiment, the first electrode 111 and the first conductive layer 1131b are connected through the first adhesive layer 1134 having conductivity, so that the above resistance can be eliminated or reduced. Specifically, at an initial moment when the first electrode 111 is adhered to the first conductive layer 1131b by means of the first adhesive layer 1134, since the first adhesive layer 1134 has a certain extensibility (such as a conductive adhesive cloth) or fluidity (such as a conductive silver paste), the gap between the first electrode 111 and a first wire layer may be filled with the first adhesive layer 1134, and thus the resistance can be reduced. In addition, after the first adhesive layer 1134 is cured, a firm connection can be formed, so that a peel strength between the first electrode 111 and the first conductive layer 1131b is increased. The second electrode 112 and the second conductive layer 1132b realize conduction and adhesion through the second adhesive layer 1135 in the same way, which will not be repeated herein.

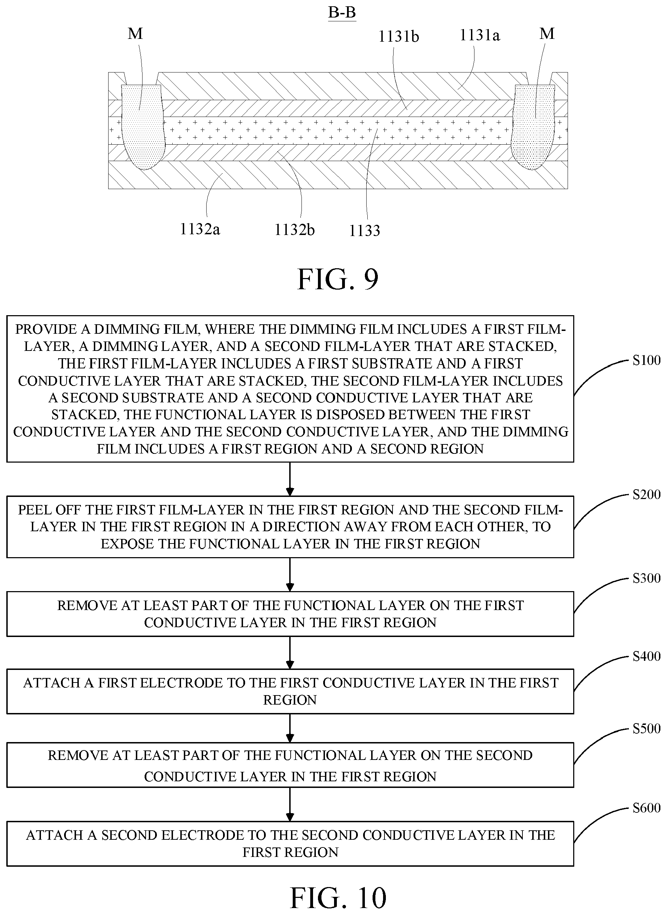

As illustrated in FIG. 9, the dimming member 110 has a sealing structure M. At least part of the sealing structure M is disposed at a periphery of the dimming member 110. The first substrate 1131a at the sealing structure M and the second substrate 1132a at the sealing structure M are connected to each other and fused together. In other words, the first substrate 1131a and the second substrate 1132a are connected to each other at a periphery of the first substrate 1131a and a periphery of the second substrate 1132a, to form the sealing structure M. Therefore, a foreign object can be isolated from the first substrate 1131a and the second substrate 1132a, to prevent the foreign object from entering the inside of the dimming film 113 and damaging the dimming layer 1133. Meanwhile, after the sealing structure M is formed, a peel strength at an edge of the dimming film 113 can be increased (about 50 times of a peel strength before sealing), thereby avoiding a problem that various film layers are separated from each other due to bending of the dimming film 113. For example, a sunroof is made of three dimensional (3D) curved glass, a bending region of a dimming film 113 may be subjected to a relatively large stress, and there may be a certain probability of peeling (i.e., the gap between the first substrate 1131a and the second substrate 1132a become larger). Therefore, this problem can be overcome after the sealing structure M is formed.

Specifically, each of the first connecting layer 130 and the second connecting layer 140, used for adhering the light-transmitting member 120 to the dimming member 110, contains a plasticizer. If the plasticizer enters the interior of the dimming film 113 through the edge of the dimming film 113, the plasticizer may be in contact with the dimming layer 1133 to damage the dimming layer 1133. On the whole, it is reflected that the periphery of the dimming layer 1133 fails, and a failure region cannot exert a corresponding light-control function. In this embodiment, the sealing structure M is disposed at the periphery of the dimming member 110, thereby preventing the plasticizer from entering.

It may be noted that the sealing structure M is in a trench shape (or called a recessed shape). The dimming film 113 at the sealing structure M is 1/3 to 1/2 shorter than the dimming film 113 at an effective operation region. The trenches may all be located at the same side of the dimming film 113, or at different sides of the dimming film 113 (i.e., recessed directions are opposite). For example, the sealing structure M is rectangular. Four trenches may be at the same side of the dimming film 113 (i.e., the recessed directions of the four trenches are the same) or at different sides of the dimming film 113 (i.e., recessed directions of some of the four trenches are the same, and recessed directions of the rest of the four trenches are different).

In another related art, to facilitate attachment of electrodes, part of a first substrate and part of a second substrate are respectively removed from two opposite sides of a dimming film, so that part of a first conductive layer and part of a second conductive layer are exposed, the first conductive layer exposed is configured to be electrically connected to the first electrode, and the second conductive layer exposed is configured to be electrically connected to the second electrode. However, since the part of the first substrate and the part of the second substrate are removed (a region where a substrate is removed is called a preset region hereinafter), a sealing structure like the sealing structure in the present disclosure cannot be formed in the preset region, and thus a foreign object (such as a plasticizer) can enter the interior of the dimming film through the preset region, thereby causing damage to the dimming film. In the present disclosure, the first electrode 111 is connected to the first conductive layer 1131b from the interior of the dimming film 113, and the second electrode 112 is connected to the second conductive layer 1132b from the interior of the dimming film 113. Therefore, it is not necessary to remove the first substrate 1131a and the second substrate 1132a, so that the above sealing structure M can be formed.

As illustrated in FIG. 10, a method for manufacturing a dimming member 110 is further provided in the present disclosure. For the introduction of the dimming member 110, reference can be made to the accompanying drawings and the description of any of the above implementations. The manufacturing method includes, but is not limited to, operations at S100, operations at S200, operations at S300, operations at S400, operations at S500, and operations at S600. The operations at S100, the operations at S200, the operations at S300, the operations at S400, the operations at S500, and the operations at S600 are introduced as follows.

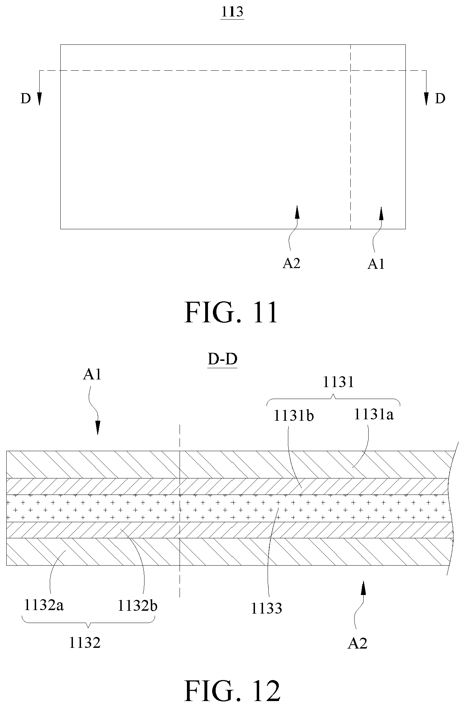

S100, a dimming film 113 is provided, where the dimming film 113 includes a first film-layer 1131, a dimming layer 1133, and a second film-layer 1132 that are stacked, as illustrated in FIG. 11 and FIG. 12.

The first film-layer 1131 includes a first substrate 1131a and a first conductive layer 1131b that are stacked. The second film-layer 1132 includes a second substrate 1132a and a second conductive layer 1132b that are stacked. The dimming layer 1133 is disposed between the first conductive layer 1131b and the second conductive layer 1132b. In other words, the first substrate 1131a, the first conductive layer 1131b, the dimming layer 1133, the second conductive layer 1132b, and the second substrate 1132a are stacked in sequence.

A shape of the dimming film 113 may be, but is not limited to, a circle, a rectangle, an ellipse, a triangle, etc. In the present disclosure, for example, the shape of the dimming film 113 is rectangular.

The dimming film 113 has a first region A1 and a second region A2. In other words, part of the dimming film 113 forms the first region A1, and the other part of the dimming film 113 forms the second region A2. It may be noted that in the present disclosure, the first region A1 may change with a position of the dimming film 113. In other words, when the dimming film 113 of the first region A1 is switched from a first position to a second position, the dimming film 113 at the second position constitutes the first region A1. A manufacturing process of the dimming member 110 will be described below with reference to the first region A1 and the second region A2.

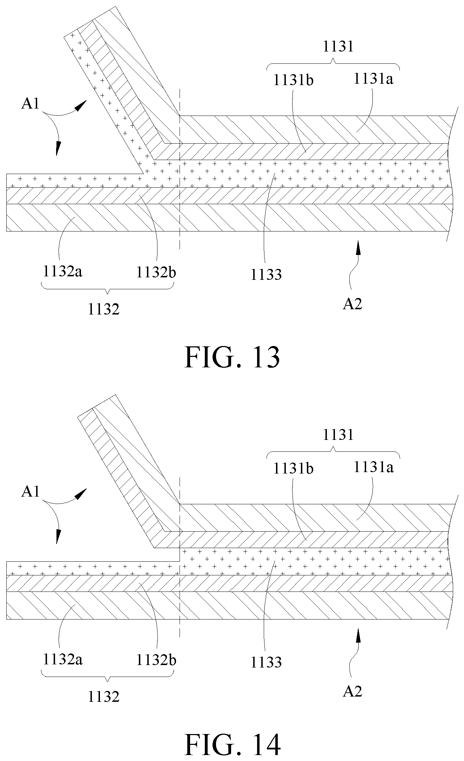

S200, the first film-layer 1131 in the first region A1 and the second film-layer 1132 in the first region A1 are peeled off in a direction away from each other, to expose the dimming layer 1133 in the first region A1, as illustrated in FIG. 13.

The so-called peeling refers to that the first film-layer 1131 and the second film-layer 1132 are torn apart. During the peeling, the first film-layer 1131 and the second film-layer 1132 move relative to each other in a direction away from each other. A manner of peeling may be manual, that is, an operator directly tears the first film-layer 1131 and the second film-layer 1132 apart by hand. In other implementations, the manner of peeling may also be a mechanical operation.

It may be noted that after the dimming film 113 is peeled off, part of the dimming layer 1133 is attached to the first conductive layer 1131b of the first film-layer 1131, and the other part of the dimming layer 1133 is attached to the second conductive layer 1132b of the second film-layer 1132.

In an implementation, the second film-layer 1132 is fixed, and the first film-layer 1131 is peeled off in a direction away from the second film-layer 1132. After a peeling operation is completed, the first film-layer 1131 in the first region A1 and the first film-layer 1131 the second region A2 are connected in a curved-line or broken-line shape, as illustrated in FIG. 13. In another implementation, the first film-layer 1131 is fixed, the second film-layer 1132 is peeled off in a direction away from the first film-layer 1131. After a peeling operation is completed, the second film-layer 1132 in the first region A1 and the second film-layer 1132 in the second region A2 are connected in a curved-line or broken-line shape. In yet another implementation, the first film-layer 1131 is peeled off in a direction of the second film-layer 1132, and the second film-layer 1132 is peeled off in the direction away from the first film-layer 1131. After a peeling operation is completed, the first film-layer 1131 in the first region A1 and the first film-layer 1131 in the second region A2 are connected in a curved-line or broken-line shape, and the second film-layer 1132 in the first region A1 and the second film-layer 1132 in the second region A2 are connected in a curved-line or broken-line shape. In the above three implementations, the first region A1 consists of the first film-layer 1131, the stripped second film-layer 1132, and the dimming layer 1133 that are peeled off.

S300, at least part of the dimming layer 1133 on the first conductive layer 1131b in the first region A1 is removed, as illustrated in FIG. 14.

Specifically, after the peeling operation is completed, the dimming layer 1133 on a peeled portion (i.e., the first region A1) of first conductive layer 1131b is cleaned by means of an organic solvent (ethanol, ethyl acetate, acetone, etc.), so that the first conductive layer 1131b at one side of the first conductive layer 1131b away from the first substrate 1131a is exposed.

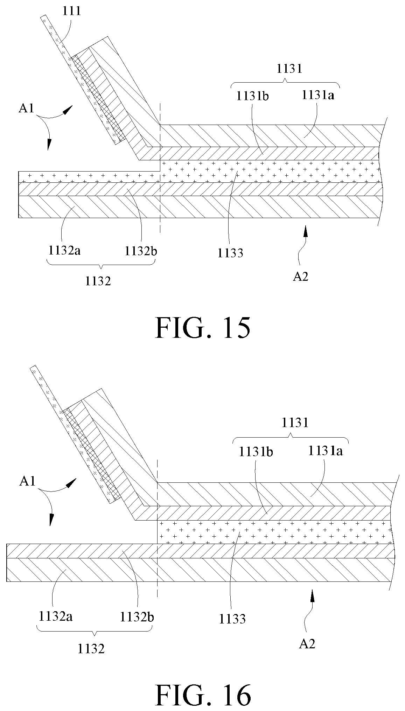

S400, a first electrode 111 is attached to the first conductive layer 1131b in the first region A1, as illustrated in FIG. 15.

In other words, the first electrode 111 is attached to the first conductive layer 1131b at one side of the first conductive layer 1131b away from the first substrate 1131a, so that the first electrode 111 is electrically connected to the first conductive layer 1131b.

S500, at least part of the dimming layer 1133 on the second conductive layer 1132b in the first region A1 is removed, as illustrated in FIG. 16.

Specifically, after the peeling operation is completed, the dimming layer 1133 on a peeled portion (i.e., the first region A1) of the second conductive layer 1132b is cleaned by means of an organic solvent (alcohol, etc.), so that the second conductive layer 1132b at one side of the second conductive layer 1132b away from the second substrate 1132a is exposed.

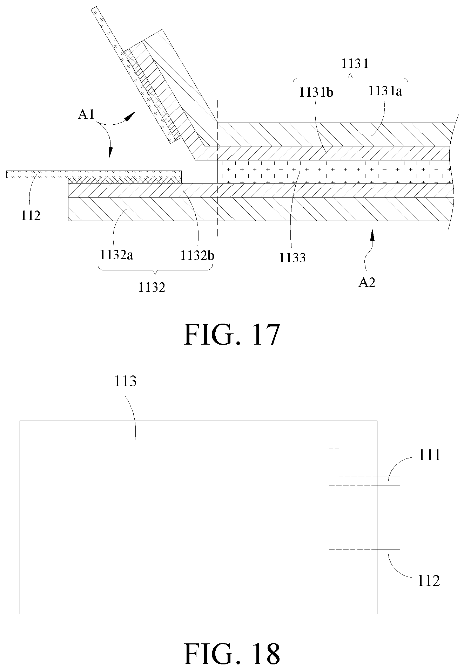

S600, a second electrode 112 is attached to the second conductive layer 1132b in the first region A1, as illustrated in FIG. 17 and FIG. 18. In other words, the second electrode 112 is attached to the second conductive layer 1132b at one side of the second conductive layer 1132b away from the second substrate 1132a, so that the second electrode 112 is electrically connected to the second conductive layer 1132b.

It may be noted that there may be multiple feasible implementations for the sequential execution order of the above the operations at S300, the operations at S400, the operations at S500, and the operations at S600. In one implementation, the operations at S300, the operations at S400, the operations at S500, and the operations at S600 are performed in sequence. In another implementation, the operations at S300 and the operations at S500 are performed in sequence (or simultaneously) first, and then the operations at S400 and the operations at S600 are performed in sequence (or simultaneously).

In the related art, the above dimming layer is not removed, instead, the electrode is directly inserted into the dimming layer, and the electrode is spaced apart from the conductive layer. However, this arrangement manner may cause undesirable consequences. Specifically, on the one hand, since the dimming layer is generally made of an insulating material, an electrical connection is not easily formed between the electrode and the conductive layer, and even if the electrical connection is formed, the dimming layer between the electrode and the conductive layer will act as a resistor with relatively large resistance. When the dimming member is powered on, the resistor may generate heat, and the dimming member may be damaged due to heat accumulation after long-time operation. In addition, part of a voltage is also distributed to the resistor, resulting in an insufficient voltage distributed to the conductive layer, so that intensity of an electric field formed by the conductive layer is not great enough, and thus the dimming member always has a certain haze and cannot be in a transparent state. On the other hand, inserting the electrode into the dimming layer will cause part of the dimming layer inserted with the electrode to be too thick. When the dimming member is sandwiched between the first light-transmitting member and the second light-transmitting member, the first light-transmitting member and the second light-transmitting member are prone to fragmentation. For the introduction of the first light-transmitting member 121 and the second light-transmitting member 122, reference can be made to the above related embodiments.

In this embodiment, before the first electrode 111 and the second electrode 112 are attached, the dimming layer 1133 on the first conductive layer 1131b in the first region A1 and the dimming layer 1133 on the second conductive layer 1132b in the first region A1 have been removed. After the first electrode 111 and the second electrode 112 are attached, no function exists between the first electrode 111 and the first conductive layer 1131b, and between the second electrode 112 and the second conductive layer 1132b, and thus the technical problem that the dimming member 110 is damaged due to heat accumulation caused by the dimming layer 1133 and the dimming member 110 always has a certain haze can be overcome. Meanwhile, since the dimming layer 1133 in the first region A1 is removed, a space for placing the first electrode 111 and the second electrode 112 can be provided, thereby avoiding fragmentation caused by the fact that the dimming member 110 is too thick at the position where the first electrode 111 and the second electrode 112 are disposed.

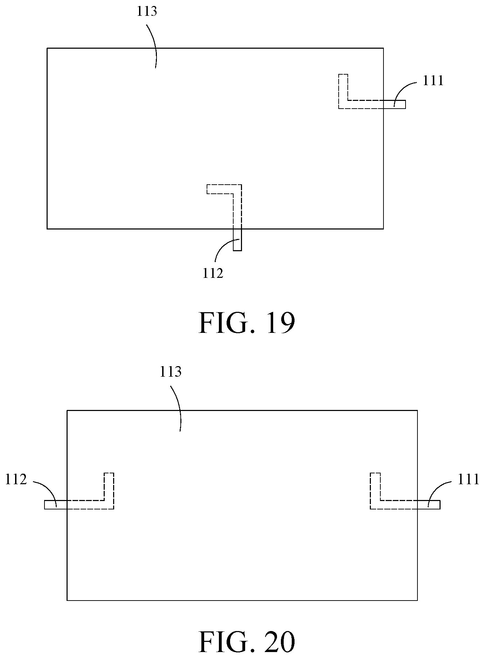

It may be noted that the first electrode 111 and the second electrode 112 may be disposed at the same end of the dimming film 113 (as illustrated in FIG. 18), or at different ends of the dimming film 113 (as illustrated in FIG. 19 and FIG. 20). In the present disclosure, for example, the first electrode 111 and the second electrode 112 are only disposed at the same end of the dimming film 113, but shall not be construed as a limitation to the dimming member 110 provided in the present disclosure.

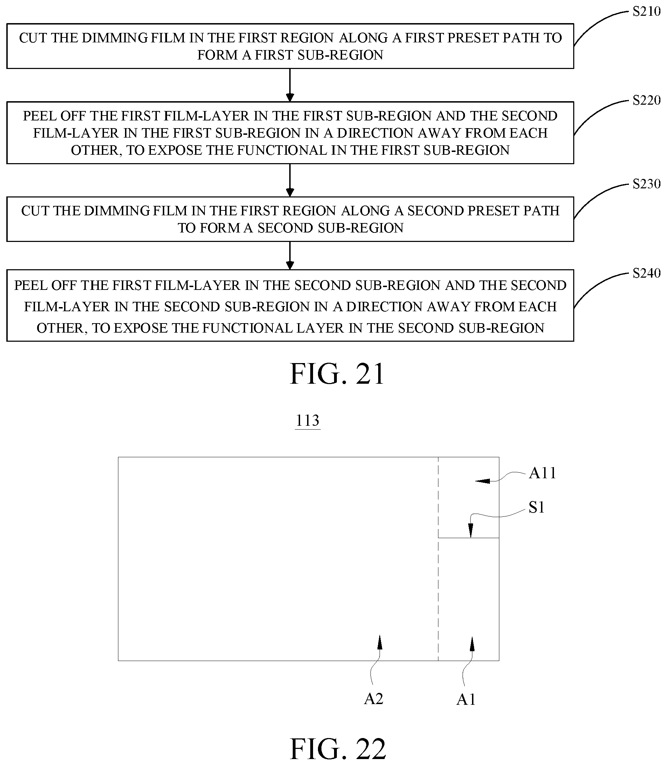

As illustrated in FIG. 21, in the above embodiment, that the first film-layer 1131 in the first region A1 and the second film-layer 1132 in the first region A1 are peeled off in the direction away from each other to expose the dimming layer 1133 in the first region A1 at operations at S200 may include operations at S210, operations at S220, operations at S230, and operations at S240. The operations at S210, the operations at S220, the operations at S230, and the operations at S240 are introduced as follows.

S210, the dimming film 113 in the first region A1 is cut along a first preset path S1 to form a first sub-region A11, as illustrated in FIG. 22.

The first preset path S1 may be a straight line or a curve. A tool for cutting may be, but is not limited to, a pair of scissors, a blade, etc., as long as the first sub-region A11 can be formed by cutting.

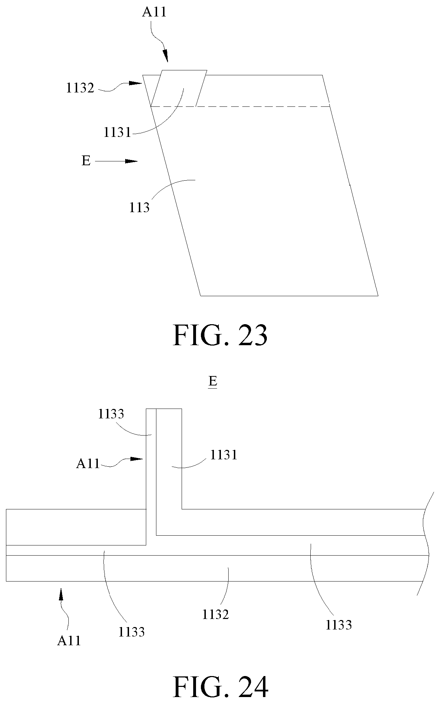

S220, the first film-layer 1131 in the first sub-region A11 and the second film-layer 1132 in the first sub-region A11 are peeled off in a direction away from each other, to expose the dimming layer 1133 in the first sub-region A11, as illustrated in FIG. 23 to FIG. 24. For the introduction of the peeling process, reference may be made to the introduction at the operations at S200.

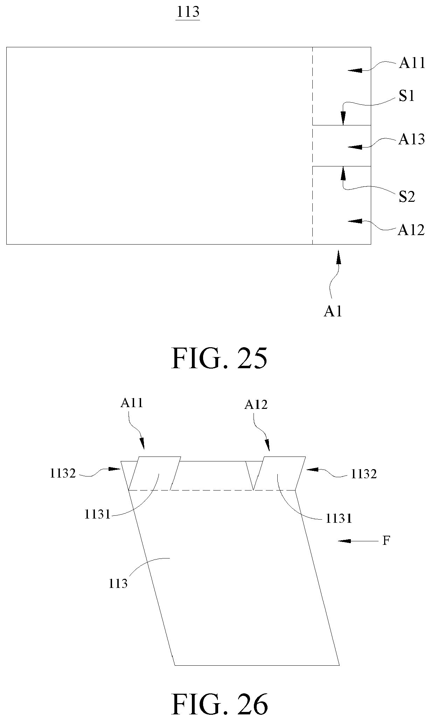

S230, the dimming film 113 in the first region A1 is cut along a second preset path S2 to form a second sub-region A12, as illustrated in FIG. 25.

The second preset path S2 may be a straight line or a curve. A tool for cutting may be, but is not limited to, a pair of scissors, a blade, etc., as long as the second sub-region A12 can be formed by cutting. It may be noted that the second sub-region A12 and the first sub-region A11 do not overlap.

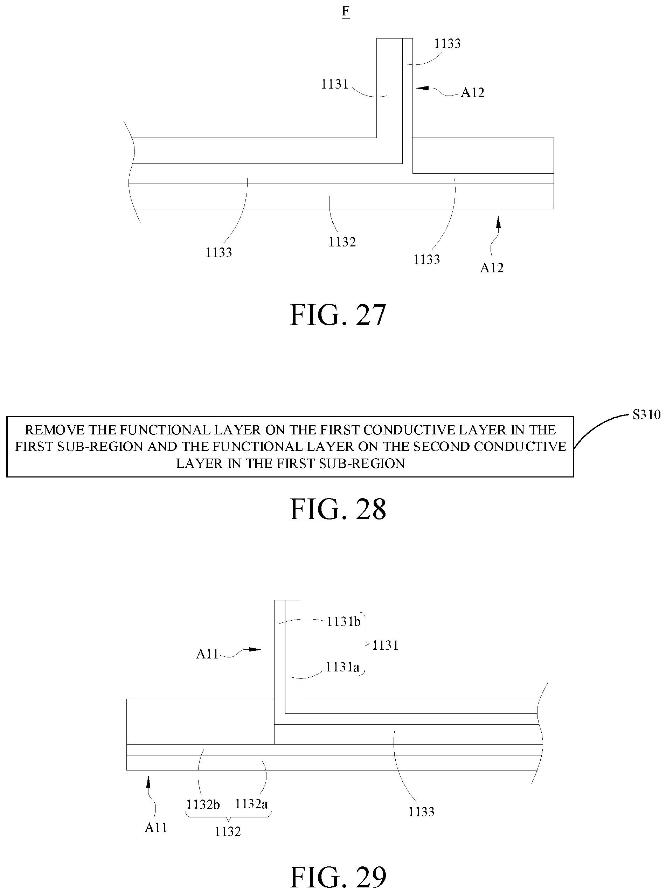

S240, the first film-layer 1131 in the second sub-region A12 and the second film-layer 1132 in the second sub-region A12 are peeled off in a direction away from each other, to expose the dimming layer 1133 in the second sub-region A12, as illustrated in FIG. 26 and FIG. 27. For the introduction of the peeling process, reference may be made to the introduction at S200.

It may be noted that there may be multiple feasible implementations for the sequential execution order of the above the operations at S210, the operations at S220, the operations at S230, and the operations at S240. In one implementation, the operations at S210, the operations at S220, the operations at S230, and the operations at S240 are performed in sequence. In another implementation, the operations at S210 and the operations at S230 are performed in sequence (or simultaneously), and then the operations at S220 and the operations at S240 are performed in sequence (or simultaneously).

It may be further noted that when the first preset path S1 is a straight line and the second preset path S2 each are a straight line, the first preset path S1 and the second preset path S2 may be parallel to each other (as illustrated in FIG. 25), or may be perpendicular to each other, or may intersect with each other in an extension direction.

As illustrated in FIG. 25, optionally, the first region A1 further includes a third sub-region A13 located between the first sub-region A11 and the second sub-region A12. In other words, the first sub-region A11 is spaced apart from the second sub-region A12. Therefore, the third sub-region A13 does not need to be peeled off, and the dimming layer 1133 in the third sub-region A13 does not need to be removed, so that a total adjustable region of the dimming member 110 can be increased, that is, the haze can also be adjusted in the third sub-region A13. In this implementation, the first sub-region A11 corresponds to the above first sub-space Z1, and the second sub-region A12 corresponds to the above second sub-space Z2. In other words, the first sub-space Z1 is located in the first sub-region A11, and the second sub-space Z2 is located in the first sub-region A11. For the introduction of the first sub-space Z1 and the second sub-space Z2, reference can be made to the introduction of the above structural embodiment.

As illustrated in FIG. 28, in the above embodiment, that the at least part of the dimming layer 1133 on the first conductive layer 1131b in the first region A1 is removed at the operations at S300 may include operations at S310. The operations at S310 are introduced as follows.

S310, the dimming layer 1133 on the first conductive layer 1131b in the first sub-region A11 and the dimming layer 1133 on the second conductive layer 1132b in the first sub-region A11 are removed, as illustrated in FIG. 29.

It can be seen from the above introduction that, the first conductive layer 1131b is configured to be attached to the first electrode 111. After the first electrode 111 is attached, the first film-layer 1131 and the second film-layer 1132 are required to be closed, so that the dimming film 113 returns to a state before peeling off. After the first film-layer 1131 and the second film-layer 1132 are closed, the first electrode 111 is located between the first conductive layer 1131b and the second conductive layer 1132b.

If the dimming layer 1133 on the second conductive layer 1132b is not removed, then after the first film-layer 1131 and the second film-layer 1132 are closed, the first electrode 111 is in contact with the dimming layer 1133 at one side of the first electrode 111 facing the second conductive layer 1132b. It may be understood that in some cases, the dimming film 113 may be exposed to sun for a long time. For example, when the dimming film 113 is applied to a sunroof of the vehicle 1, exposure to sun is difficult to avoid in summer. The dimming layer 1133 may generate some substances that may damage the first electrode 111 due to the exposure to sun, so that the first electrode 111 is damaged, and the dimming member 110 may fail after a period of time. Meanwhile, the substances generated by the dimming layer 1133 may also act on the first adhesive layer 1134, so that an adhesive property of the first adhesive layer 1134 is weakened. In this embodiment, the dimming layer 1133 on the first conductive layer 1131b and the dimming layer 1133 on the second conductive layer 1132b are removed at the same time, which may avoid the above problem.

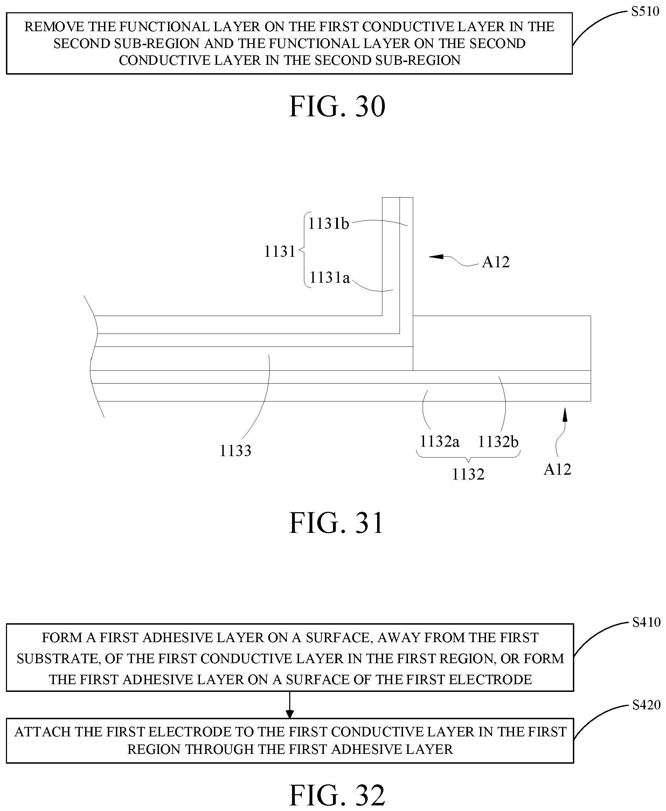

As illustrated in FIG. 30, in the above embodiment, that the at least part of the dimming layer 1133 on the second conductive layer 1132b in the first region A1 is removed at operations at S500 may include operations at S510. The operations at S510 are introduced as follows.

S510, the dimming layer 1133 on the first conductive layer 1131b in the second sub-region A12 and the dimming layer 1133 on the second conductive layer 1132b in the second sub-region A12 are removed, as illustrated in FIG. 31. The operations at S510 are similar to the above operations at S310. For the introduction of the operations at S510, reference may be made to the description of the operations at S310, which will not be repeated herein.

As illustrated in FIG. 32, in the above embodiment, that the first electrode 111 is attached to the first conductive layer 1131b in the first region A1 at operations at S400 may include operations at S410 and operations at S420. The operations at S410 and the operations at S420 are introduced as follows.

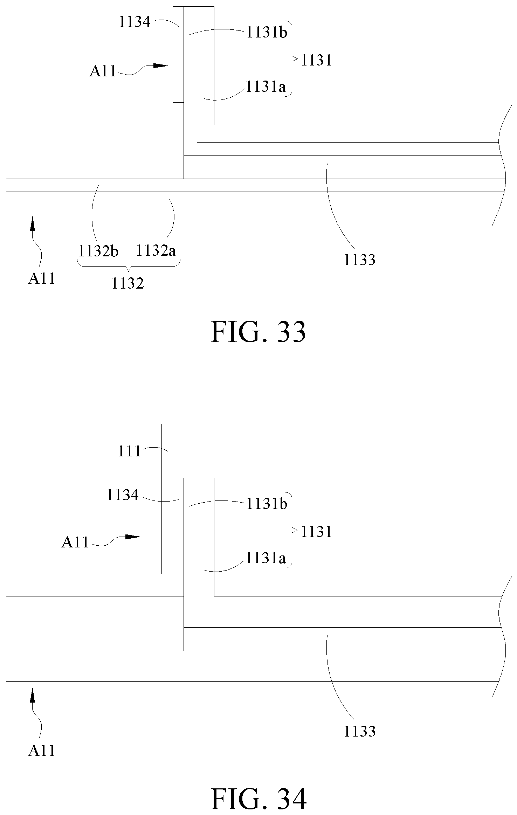

S410, a first adhesive layer 1134 is formed on a surface, away from the first substrate 113 1a, of the first conductive layer 1131b in the first region A1, or the first adhesive layer 1134 is formed on a surface of the first electrode 111, as illustrated in FIG. 33.

S420, the first electrode 111 is attached to the first conductive layer 1131b in the first region A1 through the first adhesive layer 1134, as illustrated in FIG. 34.

Specifically, in one implementation, the first adhesive layer 1134 may be formed on the first conductive layer 1131b first, and then the first electrode 111 may be attached to the first conductive layer 1131b. In another embodiment, the first adhesive layer 1134 may be formed on the first electrode 111 first, and then the first electrode 111 is attached to the first conductive layer 1131b. The first adhesive layer 1134 may be, but is not limited to, a material having adhesiveness and conductivity, such as a conductive adhesive cloth, a conductive silver paste, an anisotropic conductive adhesive, and a metal adhesive tape. For example, in one implementation, the conductive silver paste is coated on a surface of the first conductive layer 1131b away from the first substrate 1131a, then the first electrode 111 is attached to the conductive silver paste, and finally the conductive silver paste can be cured by drying, so that the first electrode 111 is firmly adhered to the first conductive layer 1131b. In another embodiment, the conductive silver paste may be applied to the first electrode 111 first, then the first electrode 111 is attached to the first conductive layer 1131b through the conductive silver paste, and finally the conductive silver paste can be cured by drying, so that the first electrode 111 is firmly adhered to the first conductive layer 1131b.

It can be understood that the first electrode 111 and the first conductive layer 1131b are connected through the first adhesive layer 1134 having conductivity, so that conduction resistance between the first electrode 111 and the first conductive layer 1131b can be eliminated or reduced. For a specific principle, reference may be made to the description in the structural embodiment.

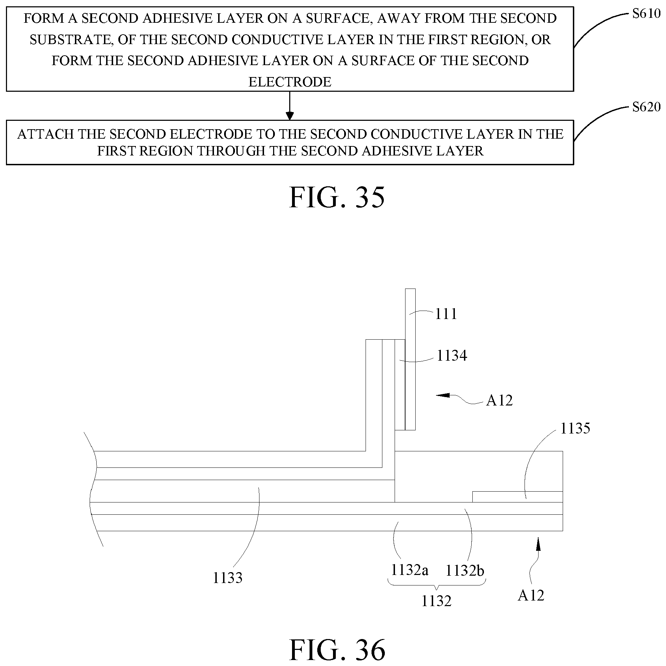

As illustrated in FIG. 35, in the above embodiment, that the second electrode 112 is attached to the second conductive layer 1132b in the first region A1 at the operations at S600 may include operations at S610 and operations at S620. The operations at S610 and the operations at S620 are introduced as follows.

S610, a second adhesive layer 1135 is formed on a surface, away from the second substrate 1132a, of the second conductive layer 1132b in the first region A1, or the second adhesive layer 1135 is formed on a surface of the second electrode 112, as illustrated in FIG. 36.

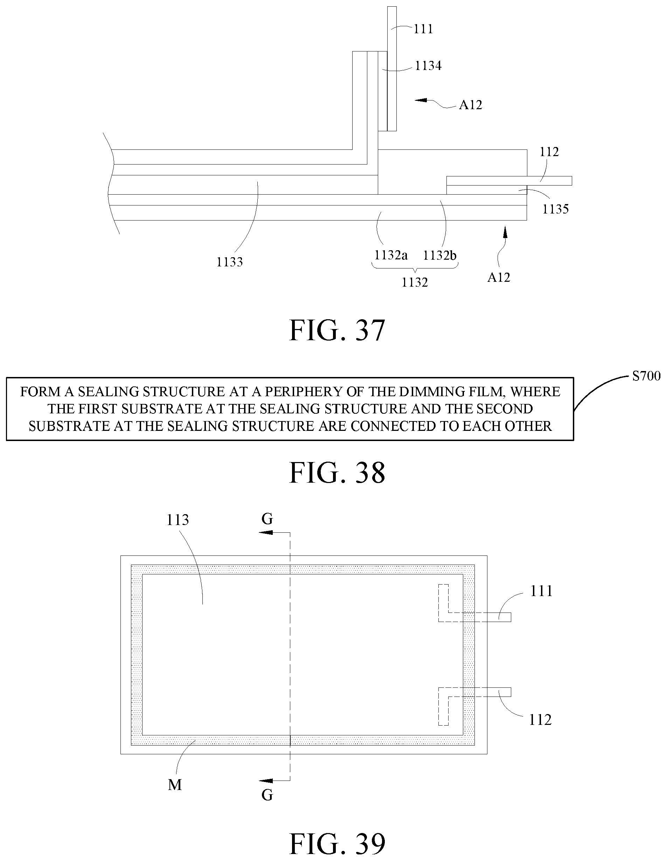

S620, the second electrode 112 is attached to the second conductive layer 1132b in the first region A1 through the second adhesive layer 1135, as illustrated in FIG. 37.

For the introduction of the operations at S610 and the operations at S620, reference can be made to the description of the operations at S410 and the operations at S420, which will not be repeated herein.

As illustrated in FIG. 38, in the above embodiment, that after the second electrode 112 is attached to the second conductive layer 1132b in the first region A1 at the operations at S600, the method further includes operations at S700. The operations at S700 are introduced as follows.

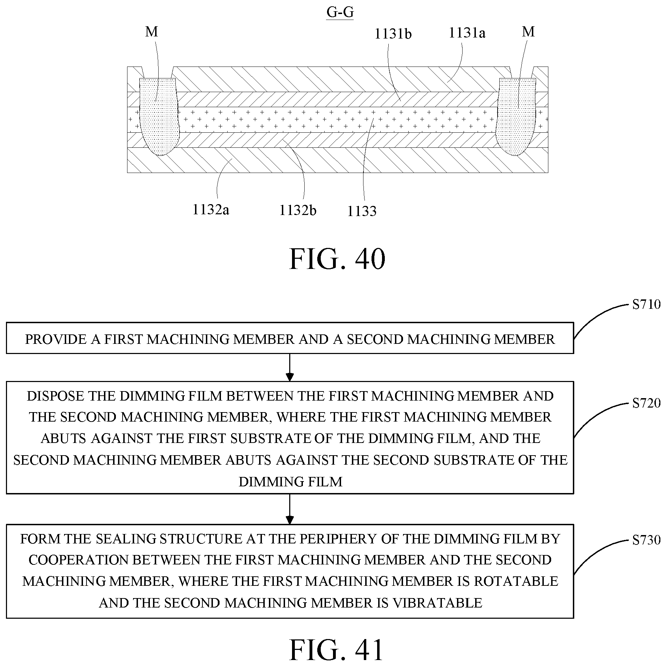

S700, a sealing structure M is formed at a periphery of the dimming film 113, where the first substrate 1131a at the sealing structure M and the second substrate 1132a at the sealing structure M are connected to each other, as illustrated in FIG. 39 and FIG. 40.

The so-called periphery refers to an edge of the dimming film 113. In other word, the sealing structure M is formed at the edge of the dimming film 113. After the sealing structure M is formed, part of the first substrate 1131a corresponding to the sealing structure M and part of the second substrate 1132a corresponding to the sealing structure M are connected together, thereby preventing a foreign object from entering the interior of the dimming film 113.

It may be noted that before the sealing structure M is formed, the first substrate 1131a is spaced apart from the second substrate 1132a. In the second region A2, between the first substrate 1131a and the second substrate 1132a, there are the first conductive layer 1131b, the dimming layer 1133, and the second conductive layer 1132b. In the first region A1, between the first substrate 1131a and the second substrate 1132a, there are the first conductive layer 1131b, the second conductive layer 1132b, the first electrode 111, the second electrode 112, the first adhesive layer 1134, and the second adhesive layer 1135. For details, reference can be made to the related accompanying drawings in the foregoing embodiments. After the sealing structure M is formed, the sealing structure M intersects with both the first electrode 111 and the second electrode 112, and except for the first substrate 1131a at a position corresponding to both the first electrode 111 and the second electrode 112 and the second substrate 1132a at corresponding to both the first electrode 111 and the second electrode 112, the rest first substrate 1131a at the sealing structure M and the rest second substrate 1132a at the sealing structure M are connected to each other. In other words, only the first substrate 1131a at the first electrode 111 and the second electrode 112 and the second substrate 1132a at the first electrode 111 and the second electrode 112 are spaced apart from each.

It has been mentioned in the above structural embodiment that, in the related art, to facilitate the attachment of the electrode, part of the first substrate and part of the second substrate are removed to expose part of the first conductive layer and part of the second conductive layer, then the first electrode is directly attached to the first conductive layer and the second electrode is directly attached to the second conductive layer, and this process does not involve the above peeling operation. However, by this manufacturing method, the sealing structure in the present disclosure cannot be formed at a position where the electrode is disposed, and a foreign object (such as a plasticizer) can enter the interior of the dimming film through this position, thereby causing damage to the dimming film. However, in the present disclosure, the first electrode 111 is connected to the first conductive layer 1131b and the second conductive layer 1132b from the interior of the dimming film 113, and the second electrode 112 is connected to the first conductive layer 1131b and the second conductive layer 1132b from the interior of the dimming film 113. Therefore, it is not necessary to remove the first substrate 1131a and the second substrate 1132a, so that the above sealing structure M can be formed. Meanwhile, after the sealing structure M is formed, the peel strength at the edge of the dimming film 113 can be increased (about 50 times of the peel strength before sealing), thereby avoiding the problem that various film layers are separated from each other due to the bending of the dimming film. For example, the sunroof is made of the 3D curved glass, the bending region of the dimming film 113 may be subjected to the relatively large stress, and there may be a certain probability of peeling (i.e., the gap between the first substrate 1131a and the second substrate 1132a become larger). Therefore, this problem can be overcome after the sealing structure M is formed.

As illustrated in FIG. 41, in an implementation, that the sealing structure M is formed at the periphery of the dimming film 113, where the first substrate 1131a at the sealing structure M and the second substrate 1132a at the sealing structure M are connected to each other at the operations at S700 include operations at S710, operations at S720, and operations at S730 The operations at S710, the operations at S720, and the operations at S730 are introduced as follows.

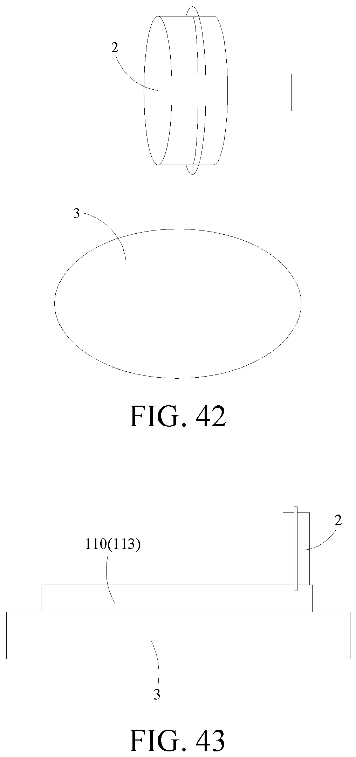

S710, a first machining member 2 and a second machining member 3 are provided, as illustrated in FIG. 42.

S720, the dimming film 113 is disposed between the first machining member 2 and the second machining member 3, as illustrated in FIG. 43.

The first machining member 2 abuts against the first substrate 1131a of the dimming film 113. The second machining member 3 abuts against the second substrate 1132a of the dimming film 113.

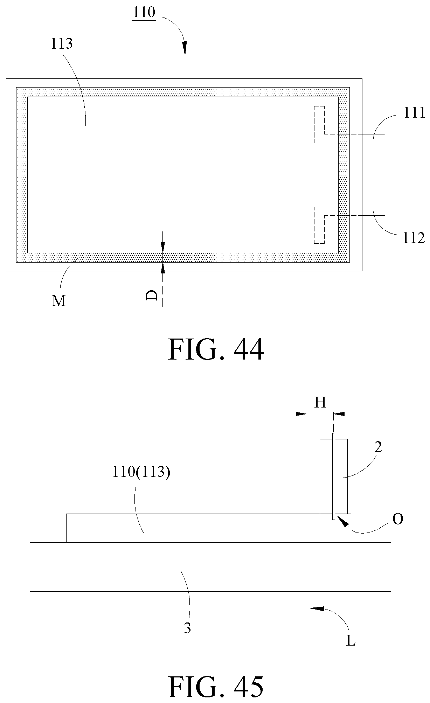

S730, the sealing structure M at the periphery of the dimming film 113 is formed by cooperation between the first machining member 2 and the second machining member 3. In other words, the first substrate 1131a and the second substrate 1132a are connected to each other at the periphery of the first substrate 1131a and the periphery of the second substrate 1132a, to form the sealing structure M, as illustrated in FIG. 44.

Specifically, the first machining member 2 is a carrying platform for carrying the dimming film 113. A shape of the first machining member 2 may be, but is not limited to, a circle, an ellipse, a rectangle, etc. The second machining member 3 is wheel-shaped, and is configured to cooperate with the first machining member 2, to tightly abut against the dimming film 113. The first machining member 2 is rotatable. The second machining member 3 is vibratable. By the cooperation between the first machining member 2 and the second machining member 3, the first substrate 1131a at the edge of the dimming film 113 and the second substrate 1132a at the edge of the dimming film 113 are fused together, thereby forming the sealing structure M and obtaining the dimming member 110.

It may be noted that the sealing structure M is in a trench shape (or called a recessed shape), and the dimming film 113 at the sealing structure M is 1/3 to 1/2 shorter than the dimming film 113 at an effective operation region. The trenches may all be located at the same side of the dimming film 113, or at different sides of the dimming film 113 (i.e., recessed directions are opposite). For example, the sealing structure M is rectangular. Four trenches may be at the same side of the dimming film 113 (i.e., the recessed directions of the four grooves are the same) or at different sides of the dimming film 113 (i.e., recessed directions of some of the four trenches are the same, and recessed directions of the rest of the four trenches are different).

The following will introduce a process of integrating the first substrate 1131a with the second substrate 1132a by the cooperation between the first machining member 2 and the second machining member 3 in detail.

The first machining member 2 is rotatable relative to the dimming film 113. During rotation, sliding friction exists between the first machining member 2 and the first substrate 1131a, and the temperature of the first substrate 1131a may rise due to heat caused by the sliding friction. Meanwhile, the second machining member 3 can drive the dimming film 113 to vibrate (high-frequency vibration) relative to the first machining member 2. During vibration, high-frequency friction between the first machining member 2 and the first substrate 1131a is formed due to a high-frequency abutment effect between the first machining member 2 and the first substrate 1131a, and high-frequency friction between the second machining member 3 and the second substrate 1132a is also formed due to a high-frequency abutment effect between the second machining member 3 and the second substrate 1132a. Therefore, under the action of the first machining member 2 and the second machining member 3 together, the first substrate 1131a and the second substrate 1132a each may rise in temperature and be in a region molten state, and then be fused together. After cooling, the sealing structure M with a better sealing effect can be formed. It may be noted that during the vibration, the first conductive layer 1131b, the second conductive layer 1132b, and the dimming layer 1133 that are corresponding to the first machining member 2 are smashed.

Optionally, as illustrated in FIG. 45, the second machining member 3 is rotatable around a preset axis L. The preset axis L is parallel to a direction of the first machining member 2 towards the second machining member 3. An action point (indirect action) on the second machining member 3 abutted against by the first machining member 2 is defined as an abutment point O. A distance from the preset axis L to the abutment point O is greater than or equal to a preset distance H, where the preset distance H is greater than zero. It may be understood that since the second machining member 3 is vibratable during sealing, if the second machining member 3 rotates around the abutment point O as the center point, a recess may be defined at a position of the abutment point O on the second machining member 3 due to long-time abutment of the first machining member 2, and finally, the dimming film 113 may be damaged. In this implementation, since the preset distance H is set to be greater than zero, during rotation of the second machining member 3 around the preset axis L, the abutment point O will also rotate around the preset axis L, that is, the abutment point O is an unfixed point. Therefore, the first machining member 2 is avoided from repeatedly acting on the same point on the second machining member 3, and thus the above recess can further be avoided from being defined. In addition, the sealing structure M with a certain width D (as illustrated in FIG. 44) can also be formed due to the unfixed point, thereby improving the sealing effect of the dimming film 113.

Further, the sealing structure M is generally annular. The annularity may be, but is not limited to, a circular ring, a rectangular ring (as illustrated in FIG. 44), an elliptical ring, etc. A specific shape may depend on an edge trend of the dimming film 113, which is not limited herein.

Optionally, the dimming film 113 may further define notches (for example, which are serrated, semicircular, a rectangular, etc., and are not limited in number) at the periphery of the dimming film 113, to avoid wrinkles when the dimming film 113 is applied to the light-transmitting member 120 with a 3D curved surface.

It can be understood that to form the overall shape of the sealing structure M, relative movement needs to be generated between the first machining member 2 and the dimming film 113. In other words, the first machining member 2 needs to be moved relative to the dimming film 113 along a preset trend (the overall shape of the sealing structure M), to abut against the dimming film 113 at different positions of the dimming film 113, thereby gradually forming the sealing structure M. The sealing structure M formed along the preset trend may be implemented only by the movement of the first machining member 2, may be implemented by the second machining member 3 driving the movement of the dimming film 113, or may be implemented by other foreign objects driving the movement of the dimming film 113.

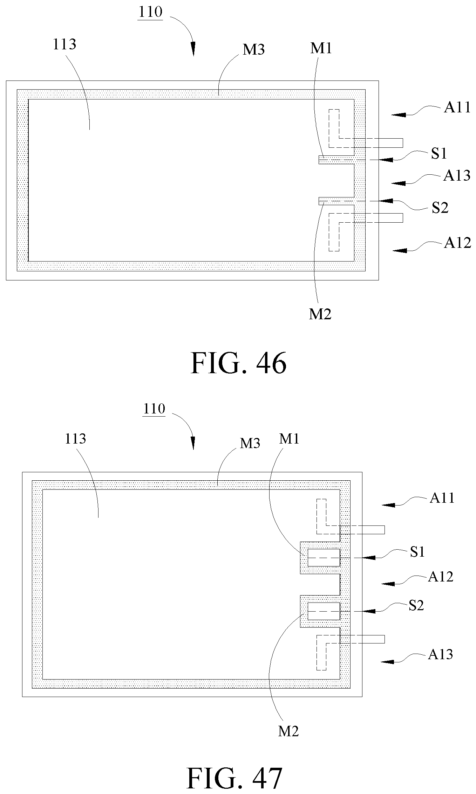

As illustrated in FIG. 46, the sealing structure M may include a first sub-structure M1, a second sub-structure M2, and a third sub-structure M3. The first sub-structure M1 is formed at a boundary between the first sub-region A11 and the third sub-region A13. The second sub-structure M2 is formed at a boundary between the second sub-region A12 and the third sub-region A13. The third sub-structure M3 is formed along the edge trend of the dimming film 113 and configured to seal the edge of the dimming film 113. It can be understood that since the first sub-region A11, the second sub-region A12, and the third sub-region A13 are formed by cutting along the first preset path S1 and the second preset path S2, there is a notch at a position of the first preset path S1 and there is a notch at a position of the second preset path S2, and the notches also need to be sealed.

Regarding the first sub-structure M1, in one implementation, the first sub-structure M1 is formed along the first preset path S1. In other words, the first sub-structure M1 is formed on the first preset path S1 and has the same trend as the first preset path S1, as illustrated in FIG. 46. In another implementation, the first preset path S1 is enclosed by the first sub-structure M1 and the third sub-structure M3. In other words, the first sub-structure M1 and the third sub-structure M3 form a ring of encirclement, and the first preset path S1 is in the ring of encirclement, as illustrated in FIG. 47.

Regarding to the second sub-structure M2, in one implementation, the second sub-structure M2 is formed along the second preset path S2. In other words, the second sub-structure M2 is formed on the second preset path S2 and has the same trend as the second preset path S2, as illustrated in FIG. 46. In another implementation, the second preset path S2 is enclosed by the second sub-structure M2 and the third sub-structure M3. In other words, the second sub-structure M2 and the third sub-structure M3 form a ring of encirclement, and the second preset path S2 is in the ring of encirclement, as illustrated in FIG. 47.

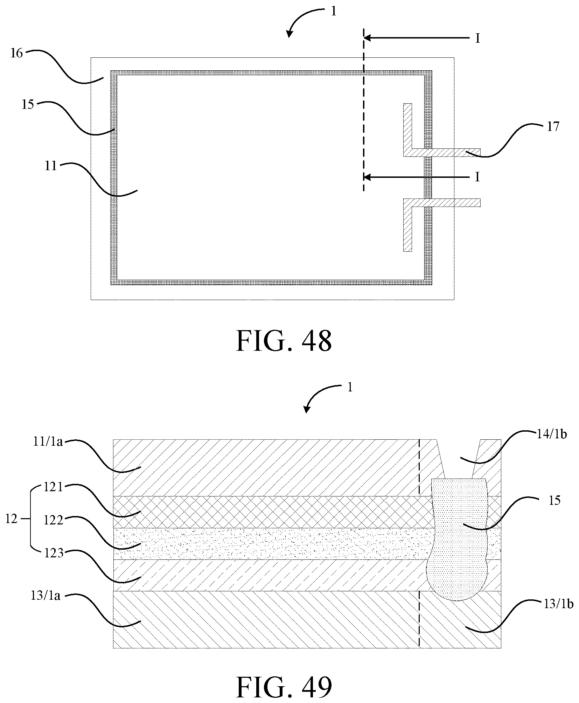

### Embodiment 2 (FIG. 48 to FIG. 58)

A dimming member 1 is provided in the present disclosure. As illustrated in FIG. 48 and FIG. 49 together, where FIG. 48 is a schematic top view of a dimming member provided in implementation (1) of the present disclosure, and FIG. 49 is a schematic sectional view in FIG. 48 taken along line I-I. The dimming member 1 includes a dimming film. The dimming film includes a first substrate 11, a functional layer 12, and a second substrate 13 that are stacked in sequence. The functional layer 12 is provided with a sealing structure 15 at a periphery of the functional layer 12. The sealing structure 15 is formed by wrapping the functional layer 12 with the first substrate 11 and the second substrate 13.

It may be noted that for better observation, the overall structure and components of the dimming member 1 are illustrated in perspective in FIG. 48, which does not mean that the overall structure and components of the dimming member 1 are disposed on the first substrate 11. In this implementation, the functional layer 12 includes the first conductive layer 121, the dimming layer 122, and the second conductive layer 123 that are stacked in sequence. When a voltage or a current is applied to the first conductive layer 121 and the second conductive layer 123, the dimming layer 122 is powered on, and the dimming member 1 is in a powered-on state. When no voltage or no current is applied to the first conductive layer 121 and the second conductive layer 123, the dimming layer 122 is powered off, and the dimming member 1 is in a powered-off state. It can be understood that in other possible implementations, the dimming member 1 may also be controlled in other manners to adjust between the powered-on state and the powered-off state, which is not limited in the present disclosure. It can be understood that in addition to the function of light control, the functional layer may also have other functions, such as communication or display, which may not be limited to dimming.

The dimming member 1 is a multilayer composite structure capable of adjusting a reflection property or a transmission property of transmitted light, such as PDLC, SPD, a dichroic dye-doped LC film, an EC film, etc. In this implementation, for example, the dimming member 1 is PDLC. When the functional layer 12 of the dimming member 1 is powered off, the dimming member 1 has the relatively large haze, and the functional layer 12 blocks most of the light when light passes through the dimming member 1, so that the dimming member 1 is in an opaque state when being powered off. When the functional layer 12 of the dimming member 1 is powered on, the functional layer 12 becomes transparent and no longer blocks light, and most of the light passes through the dimming member 1, so that the dimming member 1 is in a transparent state when being powered on.

The functional layer 12 is sensitive to environment and gases around the film, such as moisture or a plasticizer, which deprives part of the film around the functional layer of a dimming capability, and this situation may continue to deteriorate with time and temperature. Therefore, it is necessary to perform edge sealing on the functional layer 12 to form the sealing structure 15, thereby effectively protecting the functional layer 12. Preferably, the sealing structure 15 is formed at the periphery of the dimming member 1 by completely wrapping the functional layer 12. Therefore, the dimming member 110 provided in the present disclosure can ensure to function normally.

It can be understood that in this implementation (1), high-frequency friction occurs at part of the first substrate 11 and part of the second substrate 13 that are near the machining tooling. Between two substrates, a material of part of the conductive layer and a material of part of the functional layer 12 are smashed and flow to two sides. After being melted at a high temperature, such as 250°C or 300°C, the first substrate 11 abuts against the second substrate 13. After being cooled and cured, the dimming-member sealing structure 15 with high density is formed. Therefore, the functional layer has water absorption less than 1%, the peel strength of the dimming member 1 is enhanced effectively, and the overall mechanical strength is relatively great. Meanwhile, no short circuit occurs between the first conductive layer 121 and the second conductive layer 123, thereby improving yield and product reliability.

Alternatively, as illustrated in FIG. 49 again, the dimming member 1 includes the first substrate 11, the functional layer 12, and the second substrate 13 that are stacked in sequence. The first substrate 11 and the second substrate 12 each include a substrate body portion 1a and a substrate edge portion 1b. The functional layer 12 is kept or sandwiched between the substrate body portion 1a of the first substrate 11 and the substrate body portion 1a of the second substrate 12. The sealing structure for wrapping the functional layer 12 is formed by the substrate edge portion 1b of the first substrate 11 and the substrate edge portion 1b of the second substrate 12.

In this implementation (1), the total thickness of the first substrate 11 and the first conductive layer 121 in the stacked direction is the same as the total thickness of the first substrate 12 and the second conductive layer 13 in the stacked direction, each being about 187 µm. The thickness of the dimming layer 122 in the stacked direction is about 11 µm. In other words, the total thickness of the dimming member 1 in the stacked direction is about 385 µm.

As illustrated in FIG. 49 again, the dimming member 1 defines at least one groove structure 14 at a periphery of the dimming member 1. The sealing structure is disposed at the groove structure 14. In this implementation, the length of the groove structure 14 in the stacked direction is about 270 µm. In other possible implementations, the length of the groove structure 14 in the stacked direction may change with actual operation.

It may be noted that in the stacked direction, the thickness of the first conductive layer 121 and the thickness of the second conductive layer 123 is small, and the thickness value is usually on the order of several hundred nm, much less than 5 µm. In addition, the first conductive layer 121 is closely bonded to the first substrate 11, and the second conductive layer 123 is closely bonded to the second substrate 13. Therefore, in the present disclosure, the first conductive layer 121 and the second conductive layer 123 can be substantially regarded as part of the first substrate 11 or part of the second substrate 13 in the stacked direction. The material in the dimming layer 122 at the groove structure 14 may be extruded, so that the groove structure is transparent or translucent. In a possible implementation, the sealing structure 15 is seamlessly integrated with the first substrate 11 and/or the second substrate 13.

Specifically, in a possible implementation, the sealing structure 15 is formed by the first substrate 11 and/or the second substrate 13 being melted and contracted towards the functional layer 12.

Specifically, in this implementation, a longitudinal section of part of the groove structure 14 located in the first substrate 11 is trapezoidal. In other possible implementations, the longitudinal section of the part of the groove structure 14 in the first substrate 11 may also be rectangular, elliptical, etc., which is not limited in the present disclosure.

The groove structure 14 extends through the functional layer 12, and is in communication with a surface of the functional layer 12 close to the first substrate 11 and/or a surface of the functional layer 12 close to the second substrate 13. Under the action of gravity, the first substrate 11 in a high-temperature molten state may flow towards the second substrate 13 through the groove structure 14 and fills the groove structure 14, to form the sealing structure 15. It can be understood that in other possible implementations, under the action of gravity, the second substrate 13 in a high-temperature molten state may also flow towards the first substrate 11 through the groove structure 14. Both the first substrate 11 in the high-temperature molten state and the second substrate 13 in the high-temperature molten state may fill the groove structure 14, which is not limited in the present disclosure.

It may be noted that in this implementation, since the first substrate 11 is melted and contracted towards the functional layer 12 to form the sealing structure 15, at least part of the first substrate 11 at one side of the first substrate 11 away from the functional layer 12 is recessed.

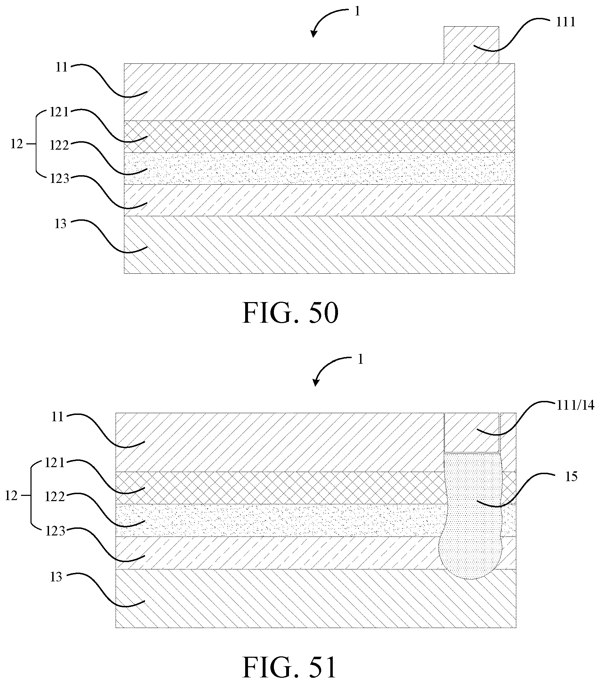

To avoid this problem, as illustrated in FIG. 50, FIG. 50 is a schematic view of a first substrate with a raised portion provided in implementation (2) of the present disclosure. Specifically, before the groove structure 14 is defined, a raised portion is pre-filled at a corresponding portion of the first substrate 11 to form a filling portion 111. After the first substrate 11 is melted and flows into the groove structure 14, and is cooled and cured, the filling portion 111 can supplement the recessed portion of the first substrate 11. After being melted, the first substrate 11 is relatively flat at one side of the first substrate 11 away from the functional layer 12. In this implementation, in the stacked direction, the thickness of the filling portion 111 is 1/3 to 1/2 times of the thickness of the first substrate 11 or the second substrate 13.

In other possible implementations, as illustrated in FIG. 51, FIG. 51 is a schematic view of filling a first substrate provided in implementation (3) of the present disclosure. The difference between implementation (3) and implementation (2) lies in that, when the groove structure 14 is defined, the recessed portion of the first substrate 11 is filled with the filling portion 111, so that the first substrate is relatively flat at one side surface of the first substrate 11 away from the functional layer 12. In terms of appearance, the groove structure 14 substantially disappears, and is more beautiful although the cost is increased. In particular, when the dimming member 1 is applied to a vehicle window such as a frameless vehicle window (but not limited thereto), it may be preferably considered to define the groove structure 14 and "fill and level up" the sealing structure 15 with the filling portion 111. It may be noted that the material of the filling portion 111 may be the same or different from the first substrate 11. The "fill and level up" may be substantially fill and level up. In other words, the substrate body portion is substantially flush with an upper surface of the filling portion. The "fill and level up" may be completely fill and level up. In other words, the substrate body is flush with the upper surface of the filling portion. It can be understood that the groove structure 14 may also be defined first, and then the filling portion 111 is adopted to "fill and level up" the sealing structure 15.

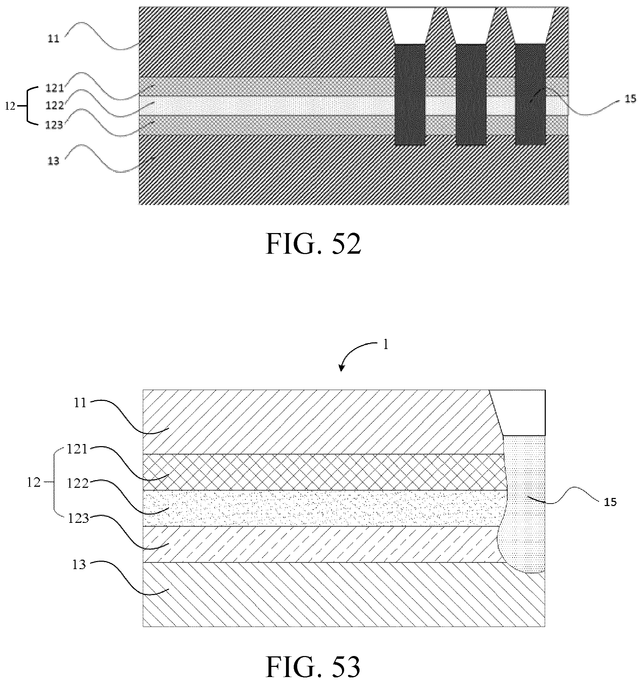

In a possible implementation, as illustrated in FIG. 49 and FIG. 52 together, FIG. 52 is a schematic sectional view of a dimming member provided in implementation (4) of the present disclosure. A longitudinal section of the sealing structure 15 at the groove structure 14 is in a U shape, a I shape, an II shape, a III shape, or a combination thereof.

Specifically, as illustrated in FIG. 49, a longitudinal section of the sealing structure 15 at the groove structure 14 is U-shaped. As illustrated in FIG. 52, the longitudinal section of the sealing structure 15 at the groove structure 14 is of the III shape. It can be understood that the sealing structure 15 of the III shape can be regarded as having six stress contact surfaces with both the first substrate 11 and the second substrate 13. The sealing structure 15 of the U shape can be regarded as having two stress contact surfaces with both the first substrate 11 and the second substrate 13. Therefore, on the one hand, under otherwise identical conditions, the sealing structure 15 of the III shape can provide stronger peel strength than the sealing structure 15 of the U shape. However, on the other hand, compared to the sealing structure 15 of the III shape, the sealing structure 15 of the U shape is simpler and more convenient to manufacture.

It can be understood that shapes of different sealing structures 15 adjusts the peel strength of the dimming member 1 differently. FIG. 49 and FIG. 52 of the present disclosure are merely some possible implementations, and do not represent that the present disclosure limits the shape of the sealing structure 15. In other possible implementations, the sealing structure 15 may also have other shapes, which is not limited in the present disclosure.

As illustrated in FIG. 48 again, in a possible implementation, the groove structure 14 includes a stepped structure or a trench structure. When the groove structure 14 is a trench structure, a dam structure 16 is disposed around a periphery of the groove structure 14. The dam structure 16 completely electrically isolates the dimming member 1 around the periphery of the groove structure 14 from the dimming member 1 in the inner ring of the groove structure 14. A distance between the dam structure 16 and the groove structure 14 range from 0.5 mm to 10 mm.

It may be noted that the dam structure 16 includes part of the first substrate 11, part of the functional layer 12, and part of the second substrate 13 that are stacked in sequence. However, after edge sealing of the dimming member 1 is completed, the dam structure 16 loses the dimming function and further protects the sealing structure 15.

In this implementation, the distance between the dam structure 16 and the groove structure 14 ranges from 0.5 mm to 10 mm. Preferably, the distance between the dam structure 16 and the groove structure 14 ranges from 3 mm to 7 mm. Specifically, the distance between the dam structure 16 and the groove structure 14 may be 5.1 mm, 5.7 mm, 6.4 mm, etc., which is not limited in the present disclosure.

When the groove structure 14 is the stepped structure, reference can be made to FIG. 53, which is a schematic view of a stepped structure provided in implementation (5) of the present disclosure. The dam structure 16 in the groove structure 14 is cut off to form the dimming member 1 having almost no undimming area, so as to meet the manufacturing requirements of emerging frameless-dimming-laminated-glass or other components and structures.

In a possible implementation, as illustrated in FIG. 48 again, the dimming member 1 further includes a conductive member 17. The conductive member 17 is electrically connected to the first conductive layer 121 and the second conductive layer 123. The conductive member 17 is configured to transmit a current to the first conductive layer 121 and the second conductive layer 123, so that the dimming member 1 is in a powered-on state. It can be understood that when the conductive member 17 stops transmitting the current to the first conductive layer 121 and the second conductive layer 123, the dimming member 1 is in a powered-off state.

The conductive member 17 includes a first electrode and a second electrode. The first electrode is electrically connected to the first conductive layer 121. The second electrode is electrically connected to the second conductive layer 123.

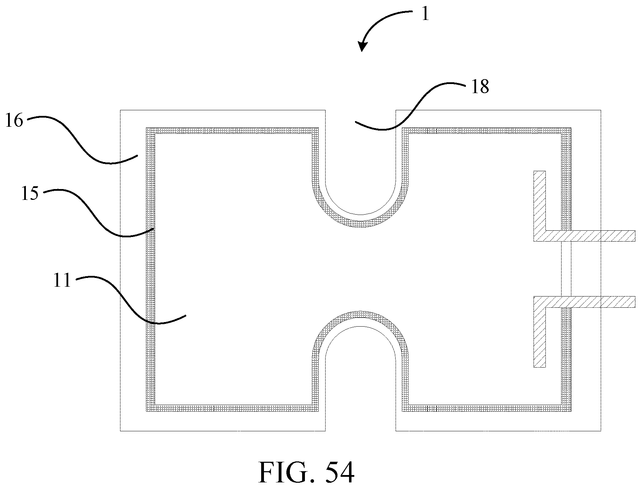

In a possible implementation, as illustrated in FIG. 54, FIG. 54 is a schematic top view of a dimming member provided in implementation (6) of the present disclosure. The dimming member 1 further defines at least one notch 18. An opening direction of the at least one notch 18 may be substantially perpendicular to the stacked direction of the dimming member 1 to be outwards.

Specifically, the opening direction of the notch 18 is illustrated by an arrow in FIG. 5. In implementation (6), an opening shape of the notch 18 is U-shaped. In other possible implementations, the opening shape of the notch 18 may also be V-shaped or other shapes, and the notches 18 may also have different sizes, which are not listed one by one in the accompanying drawing. The opening shape of the notch 18 is not limited in the present disclosure. It may be added that the notch is preferably defined before the edge sealing is performed on the dimming member.

It may be noted that at present, much glass, such as windshield glass, vehicle door glass, sunroof glass, etc., on a vehicle, is a hyperbolic spherical shape. Therefore, a flat film is unable to be spread out after being molded on hyperbolic spherical glass, resulting in more wrinkles.

It can be understood that in implementation (6), the at least one notch 18 is defined at the periphery of the dimming member 1, so that a region of the notch 18 of the dimming member 1 molded is hidden under a black edge of the dimming member 1, and the wrinkles can be effectively avoided. Then, the edge sealing is performed on the region of the notch 18 and the periphery of the dimming member 1, so as to isolate the functional layer 12 of the dimming member 1 from the outside, thereby avoiding the influence of external moisture and a plasticizer.

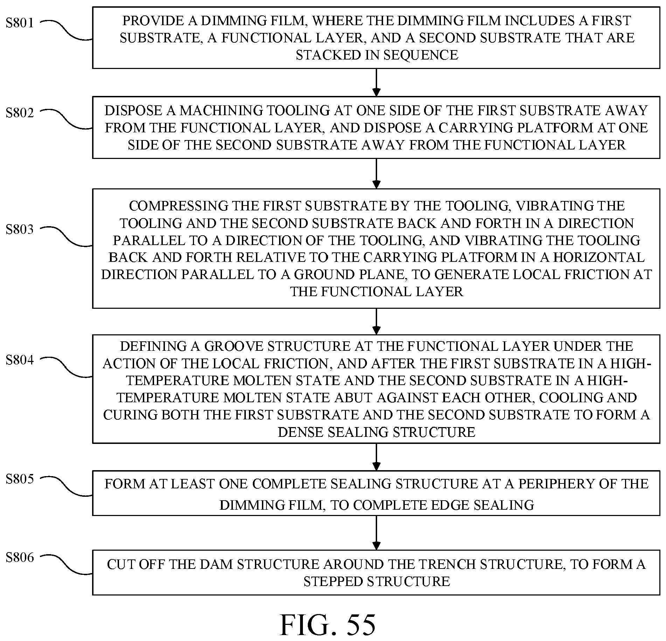

Next, according to the dimming member 1 provided in the present disclosure, a method for manufacturing a dimming member will be introduced. A method for manufacturing a dimming member is further provided in the present disclosure. As illustrated in FIG. 55, FIG. 55 is a schematic flowchart of a method for manufacturing a dimming member provided in implementation (7) of the present disclosure. The method for manufacturing a dimming member includes operations at S801, operations at S802, operations at S803, operations at S804, operations at S805, and operations at S806. The operations at S801, the operations at S802, the operations at S803, the operations at S804, the operations at S805, and the operations at S806 are introduced in detail as follows.

S801, a dimming member is provided, where the dimming member includes a first substrate, a functional layer, and a second substrate that are stacked in sequence.

Specifically, for the dimming member 1, reference may be made to the foregoing description, which is not repeated herein.

S802, a machining tooling is disposed at one side of the first substrate away from the functional layer, and a carrying platform is disposed at one side of the second substrate away from the functional layer.

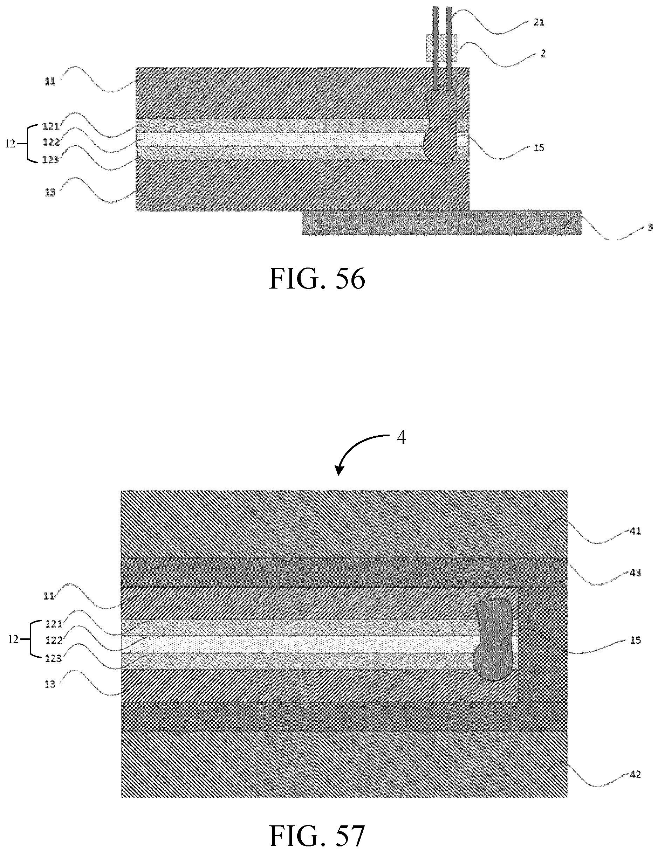

Specifically, as illustrated in FIG. 56, FIG. 56 is a schematic view of a tooling and a carrying platform provided in implementation (8) of the present disclosure. In this implementation, the tooling 2 is in the shape of a circular wheel and abuts against the first substrate 11. When the tooling 2 begins to compress the first substrate 11, the carrying platform vibrates at a high frequency, so that part of the functional layer that is in contact with the first substrate 11 and the tooling 2 is smashed, and is pushed to be collected at two sides of the tooling 2. Then direct friction occurs at the first substrate and the second substrate, and the first substrate and the second substrate are melted at a high temperature. Edge sealing of a submillimeter film is completed in a sub-second period. The circular wheel continues to rotate at a constant speed, and repeats the above process at a new position. In this way, the edge sealing is continuously performed until complete edge sealing of the periphery of the dimming member 1 is completed.

The carrying platform 3 may be a round iron anvil with a flat surface. The carrying platform 3 abuts against the second substrate 13 and is used for carrying the dimming member 1. When the tooling 2 rolls, the tooling 2 is further used for driving the dimming member 1 to move translationally on the carrying platform 3 along a rolling direction of the tooling 2, to grind different parts of the dimming member 1.

S803, the first substrate is compressed by the tooling, the tooling and the second substrate are vibrated back and forth in a direction parallel to a direction of the tooling, and the tooling is vibrated back and forth relative to the carrying platform in a horizontal direction parallel to a ground plane, to generate local friction at the functional layer.

Specifically, when the tooling 2 grinds the first substrate 11, local friction is generated at the first substrate 11 and the functional layer 12 due to continuous vibration and displacement. Meanwhile, the carrying platform 3 vibrates at a high frequency in a direction parallel to the tooling 2, and drives the second substrate 13 to generate vibration and displacement, so that the local friction is generated at the second substrate 13 and the functional layer 12, and the temperature rises due to local frictional heating. Therefore, part of the functional layer close to the tooling is more easily to be smashed and pushed to two sides, and part of the first substrate and part of the second substrate that are near the tooling are in a molten state.

In this implementation, since the structural strength of the dimming layer 122 is weaker than each of the structural strength of the first conductive layer 121 and the structural strength of the second conductive layer 123, under a local friction effect of the first substrate 11 and a local friction effect of the second substrate 13, part of the dimming layer 122 in the functional layer 12 is first removed by friction, and the part of the dimming layer 122 removed is pushed by the tooling 2 to be collected at two sides of the tooling 2 in a grinding direction of the tooling 2. Further, mutual friction and tearing occur between the first conductive layer 121 and the second conductive layer 123, and part of the first conductive layer 121 torn and part of the second conductive layer 123 torn are pushed to be collected at two sides of the tooling 2 in a grinding direction, so as to define the groove structure 14.

S804, a groove structure is defined at the functional layer under the action of the local friction, and after the first substrate in a high-temperature molten state and the second substrate in a high-temperature molten state abut against each other, both the first substrate and the second substrate are cooled and cured to form a dense sealing structure.

The local temperature of the first substrate 11 and the second substrate 13 rapidly rises under continuous local friction, and reaches a molten temperature after exceeding a softening temperature, so that the first substrate 11 and the second substrate 13 are locally melted. A melted portion of the first substrate 11 flows towards the second substrate 13 due to gravity, and is integrated with a melted portion of the second substrate 13 to define the groove structure. After the melted portion of the first substrate 11 and the melted portion of the second substrate 13 are cooled and cured, the sealing structure 15 is formed. The sealing structure 15 is firmly connected to the first substrate 11 and the second substrate 13, thereby enhancing the peel strength of the whole structure of the dimming member 1.

The so-called peel strength refers to the maximum force required to peel off materials adhered together from a contact surface per unit width. For example, in this implementation, before the sealing structure 15 is formed, the dimming member 1 has a peel strength of 0.059 Newton (N)/mm at a peel angle of 180°. After the sealing structure 15 is formed, the peel strength of the dimming member 1 at the sealing structure 15 is 2.5 N/mm at the same peel angle, which is improved by 50 times.

It may be noted that in this implementation, by adjusting parameters such as a grinding speed of the tooling 2, a vibration frequency of the carrying platform 3, etc., the operations at S804 are completed within 0.01-100 milliseconds. It can be understood that for example, when the grinding speed of the tooling 2 and the vibration frequency of the carrying platform 3 are increased, time consumption of the operations at S804 can be shortened. Vice versa, when the grinding speed of the tooling 2 and the vibration frequency of the carrying platform 3 are reduced, the time consumption of the operations at S804 can be prolonged. The present disclosure is not limited thereto, and can be adjusted according to actual situations.

S805, at least one complete sealing structure at a periphery of the dimming member is formed, to complete edge sealing.

Specifically, in this implementation, the tooling 2 may roll to drive the dimming member 1 to move, so that the foregoing operations may be repeated at different positions of the dimming member 1. Therefore, multiple continuous sealing structures 15 can be formed, so that the continuous sealing structures 15 form a whole to connect two opposite side boundaries of the dimming member 1 perpendicular to the stacked direction, and the edge sealing is completed. In other possible implementations, the foregoing operations may also be repeated at another side of the dimming member 1, to form another sealing structure 15 that connects the two opposite side boundaries of the dimming member 1 perpendicular to the stacked direction. It can be understood that the functional layer 12 located between adjacent sealing structures 15 is protected by the sealing structures 15, thereby preventing the functional layer 12 from being damaged by ambient gas or solvent.

It may be noted that in this implementation, the sealing structure 15 is substantially transparent or translucent. When the dimming member 1 is in a powered-off state, PDLC is an opaque film with a high haze, and SPD and EC are films with colors. Therefore, regarding the method for manufacturing a dimming member provided in the present disclosure, a degree of visualization is high, and integrity and reliability of the edge sealing can be determined according to characteristics such as transparency of the sealing structure 15 of the dimming member 1.

It can be understood that in this implementation, after the first substrate 11 is melted at a high temperature, the first substrate 11 melted flows into and fills the groove structure 14, so that the first substrate 11 forms the sealing structure 15 after being cooled and cured. The sealing structure 15 is firmly connected to the second substrate 13, and thus the peel strength of the dimming member 1 is enhanced. Meanwhile, the dimming member 1 has a relatively uniform surface structure, a relatively large overall strength, and is not prone being damaged.

In a possible implementation, a distance between the tooling 2 and the carrying platform 3 is less than the thickness of the dimming member 1 in the stacked direction.

Specifically, the distance between the tooling 2 and the carrying platform 3 is less than the thickness of the dimming member 1 in the stacked direction, so that when the tooling 2 applies an extrusion force to the first substrate 11, the carrying platform 3 applies an extrusion force to the second substrate 13. In other words, the dimming member 1 is sandwiched between the tooling 2 and the carrying platform 3.

It can be understood that when the distance between the tooling 2 and the carrying platform 3 is smaller, the extrusion force applied by the tooling 2 to the first substrate 11 is larger, and the extrusion force applied by the carrying platform 3 to the second substrate 13 is larger. Although when the distance between the tooling 2 and the carrying platform 3 is smaller, a local friction effect of the first substrate 11 and the second substrate 13 on the functional layer 12 is better, to avoid the damage to the dimming member 1 caused by the extrusion force caused by the tooling 2 and the carrying platform 3, the distance between the tooling 2 and the carrying platform 3 may not be too small. In this implementation, a difference between the thickness of the dimming member 1 in the stacked direction and the distance between the tooling 2 and the carrying platform 3 corresponds to a strength threshold. The strength threshold may change according to a layered structure of the dimming member 1 and a material of the dimming member 1, which is not limited in the present disclosure.

In a possible implementation, the carrying platform 3 generates high-frequency vibration, and a vibration frequency ranges from 20 KHz to 40 KHz.

Specifically, the carrying platform 3 generates high-frequency vibration to drive the second substrate 13 to generate vibration, so as to generate local friction with the functional layer 12. It can be understood that the vibration frequency of the carrying platform 3 affects the degree of local friction between the second substrate 13 and the functional layer 12.

In this implementation, the vibration frequency of the carrying platform 3 ranges from 20 KHz to 40 KHz. Preferably, the vibration frequency of the carrying platform 3 ranges from 27 KHz to 36 KHz. Specifically, the vibration frequency of the carrying platform 3 may be 29 KHz, 31 KHz, or 35 KHz, which is not limited in the present disclosure.

In a possible implementation, the tooling 2 includes at least one tooling 21 enclosing the outside of the tooling 2. A width of the tooling 21 enclosing the tooling 2 ranges from 0.2 mm to 10 mm.

Specifically, the tooling 2 grinds the first substrate 11, and mainly, local friction occurs between the tooling 21 and the first substrate 11. In other words, both formation of the groove structure 14 and the shape of the groove structure 14 are related to the tooling 21. The width of the tooling 21 enclosing the tooling 2 directly affects a dimension of an aperture of the groove structure 14. In this implementation, the width of the tooling 21 enclosing the tooling 2 ranges from 0.2 mm to 10 mm. Preferably, the width of the tooling 21 enclosing the tooling 2 ranges from 0.5 mm to 3 mm. More preferably, the width of the tooling 21 enclosing the tooling 2 ranges from 0.8 mm to 2.6 mm. Specifically, the width of the tooling 21 enclosing the tooling 2 may be 1 mm, 1.5 mm, 2.0 mm, etc., as long as the groove structure 14 is not affected to allow the melted portion of the first substrate 11 or the melted portion of the second substrate 13 to pass through, which is not limited in the present disclosure.

As illustrated in FIG. 56, when the number of the tooling 21 is greater than or equal to two, multiple toolings 21 are arranged at intervals, and the groove structures 14 of different shapes can be defined, thereby defining the sealing structures 15 of different shapes. It may be noted that for the multiple toolings 21, local friction may be generated between at least one tooling 21 and the first substrate 11, and local friction may be generated between another tooling 21 and the second substrate 12. It can be understood that the shape of the tooling 21 may affect the shape of the groove structure 14. There may be a single tooling 21 with at least one concave-convex pattern parallel to the outer side of the tooling, where the concave-convex pattern may be a simple pattern such as a rectangle or a circle, or may be various complex patterns such as frills, serrations, or tire textures, so that the shape of the sealing structure 15 finally formed in the groove structure 14 is more beautiful. The groove structure may be a single groove, double grooves, or multiple grooves. When there are more than two grooves, preferably at least one groove is continuous and complete. In addition, the tooling 21 may also have a special shape. For example, the tooling 21 may have one or more tooth marks (e.g., like tire textures), and the tooth marks may be continuous or not, or may be arranged in a staggered manner, so as to facilitate formation of the sealing structure 15 having a relatively strong peel strength and a relatively strong edge sealing strength, which is not limited in the present disclosure.

In a possible implementation, the groove structure 14 extends through the functional layer 12, and is communication with a surface of the functional layer 12 close to the first substrate 11 and/or a surface of the functional layer 12 close to the second substrate 13.

In a possible implementation, as illustrated in FIG. 54 again, the groove structure 14 includes the stepped structure or the trench structure. After the at least one sealing structure is formed in the dimming member to complete the edge sealing, the method for manufacturing a dimming member further includes operations at S806. The operations at S806 are introduced in details as follows.

S806, a dam structure of the trench structure is cut off to form the stepped structure. Specifically, the dam structure 16 can also be cut off, especially when manufacturing a frameless-dimming-laminated-glass without a printed black edge (not limited thereto), to reduce the volume occupied by the dimming member 1, so that the dimming member 1 can be integrated into laminated glass or other components or structures with fewer undimming edges.

In a possible implementation, the tooling 2 is made of a metal material. Specifically, the tooling 2 is made of a metal material, and the metal material generally has good heatdissipation performance and strength. It can be understood that on the one hand, when the tooling 2 machines the first substrate 11, significant heat is generated due to friction. When the tooling 2 is made of a metal material, the tooling 2 can better dissipate heat, thereby facilitating continuous operation. On the other hand, the tooling 2 requires a certain strength to machine the first substrate 11. Generally, the metal material has a relatively strong strength, to facilitate the tooling 2 to machine the first substrate 11.

As illustrated in FIG. 49 again, the groove structure 14 extends through the functional layer 12, and is in communication with the surface of the functional layer 12 close to the first substrate 11 and the surface of the functional layer 12 close to the second substrate 13.

Specifically, the groove structure 14 is in communication with the surface of the functional layer 12 close to the first substrate 11 and the surface of the functional layer 12 close to the second substrate 13, so that a fault structure is formed at one side of each of the first conductive layer 121 close to the groove structure 14, the dimming layer 122 close to the groove structure 14, and the second conductive layer 123 close to the groove structure 14. It may be noted that in the related art, the dimming member 1 may be cut by using a laser or a mechanical device, resulting in frequent short-circuited phenomena between the first conductive layer 121 and the second conductive layer 123, and high-voltage is further required to break down a short-circuited portion.

It can be understood that in this implementation, the fault structure is formed at one side of each of the first conductive layer 121 close to the groove structure 14, the dimming layer 122 close to the groove structure 14, and the second conductive layer 123 close to the groove structure 14, so that short circuit between the first conductive layer 121 and the second conductive layer 123 may be avoided, and manufacturing of the dimming member 1 is simplified.

In a possible implementation, in the stacked direction, the thickness of the first substrate 11 and the thickness of the second substrate 13 each range from 30 µm to 200 µm. The functional layer 12 includes the first conductive layer 121, the dimming layer 122, and the second conductive layer 123 that are stacked in sequence. In the stacked direction, the first conductive layer 121 and the second conductive layer 123 each have the thickness ranging from 0.1 µm to 5 µm, and each have sheet resistance ranging from 5-200 Ω/□. In the stacked direction, the thickness of the dimming layer 122 ranges from 1 µm to 20 µm.

It may be noted that the dimming member 1 is generally applied to glass. To prevent the entire thickness of the glass from being too thick, in this implementation, in the stacked direction, the thicknesses of the first substrate 11 and the thickness of the second substrate 13 each range from 30 µm to 200 µm. Preferably, in the stacked direction, the thickness of the first substrate 11 and the thickness of the second substrate 13 each range from 45µm to 185 µm. Specifically, in the stacked direction the thicknesses of the first substrate 11 and the thicknesses of the second substrate 13 each may be 50 µm, 100 µm, 180 µm, etc., which is not limited in the present disclosure.

Specifically, in the stacked direction, the thickness of the first conductive layer 121 and the thicknesses of the second conductive layer 123 each range from 0.1 µm to 5 µm. Preferably, in the stacked direction, the thickness of each of the first conductive layer 121 and the thicknesses of the second conductive layer 123 each range from 0.5 µm to 3 µm. Specifically, in the stacked direction, the thicknesses of the first conductive layer 121 and the thicknesses of the second conductive layer 123 each may be 1 µm, 1.7 µm, 2.4 µm, etc. It can be understood that in other possible implementations, in the stacked direction, the thicknesses of the first conductive layer 121 may also be different from the thicknesses of the second conductive layer 123, which is not limited in the present disclosure.

In this implementation, it may be noted that when the dimming member 1 is made of PDLC, the thickness of the dimming layer 122 in the stacked direction ranges from 10 µm to 20 µm. When the dimming member 1 made of SPD or EC, the thickness of the dimming layer 122 in the stacked direction ranges from 1 µm to 20 µm. Preferably, the thickness of the dimming layer 122 in the stacked direction ranges from 4 µm to 18 µm. Specifically, the thickness of the dimming layer 122 in the stacked direction may be 7 µm, 9 µm, 13 µm, etc., which is not limited in the present disclosure.

In a possible implementation, the first substrate 11 and the second substrate 13 each are made of any one of PET, polymethyl methacrylate (PMMA), and polycarbonate (PC).

Specifically, PET, PMMA, and PC each are a polymer material with excellent thermoplasticity. Preferably, the first substrate 11 and the second substrate 13 each are made of PET. It can be understood that the first substrate 11 and the second substrate 13 each are made of the polymer material with excellent thermoplasticity, so that the first substrate 11 and the second substrate 13 are better melted under the action of local friction, and are integrated with each other through the groove structure 14, so as to form the sealing structure 15 after being cooled and cured.

It can be understood that in other possible implementations, the first substrate 11 and the second substrate 13 each may also be made of other materials, which is not limited in the present disclosure as long as the formation of the sealing structure 15 is not affected.

A light-transmitting assembly 4 is further provided in the present disclosure. As illustrated in FIG. 57, FIG. 57 is a schematic sectional view of a light-transmitting assembly provided in implementation (9) of the present disclosure. The light-transmitting assembly 4 includes a first light-transmitting member 41, a second light-transmitting member 42, and the above dimming member 1. The dimming member 1 is sandwiched between the first light-transmitting member 41 and the second light-transmitting member 42.

Specifically, for the dimming member 1, reference may be made to the foregoing description, which is not repeated herein. Generally, the light-transmitting assembly 4 further includes a connecting portion 42. The first light-transmitting member 41 is connected to the first substrate 11 of the dimming member 1 through the connecting portion 43. The second glass transparent member 42 is connected to the second substrate 13 of the dimming member 1 through the connecting portion 43. The first light-transmitting member and the second light-transmitting member each may be made of inorganic glass, organic glass, or a mixture thereof.

In this implementation, the connecting portion 43 is made of a polyvinyl butyral (PVB) material. It can be understood that the dimming member 1 is applied to the light-transmitting assembly 4 and has a strong peel strength. The dimming member 1 can be firmly fixed to the light-transmitting assembly 4. The dimming member 1 has a relatively uniform layered structure, has a relatively large overall strength, is not prone being damaged, and enables the light-transmitting assembly 4 to be more beautiful.

It may be noted that in the related art, an adhesive layer in a light-transmitting assembly, such as PVB, often requires addition of a plasticizer and other materials to improve a performance of a polymer material. When a dimming member is made of a PDLC material, due to the plasticizer and other materials, part of the dimming member in the range of about 3-15 mm at a periphery of the dimming member may lose a dimming function, that is, may become transparent and have no dimming function, and the part of the dimming member losing the dimming function will further increase with time. Even if no plasticizer is used, for example, after ethylene vinyl acetate (EVA) laminating is completed, under a high temperature condition, part of the dimming member in the range of 2-12 mm at the periphery of the dimming member may also lose the dimming function. In the related art, after edge sealing is performed on the dimming member, a heat aging test also needs to be performed at a high temperature of 110°C for 1000 hours. Experiments show that regarding the dimming member manufactured by using the method for manufacturing a dimming member provided in the present disclosure, only part of the dimming member in the range of about 1 mm or no more than 0.9 mm at the periphery of the dimming member loses the dimming function, and there is no problem of further deterioration. Compared to the related art, the present disclose has great improvements and better technical effects.

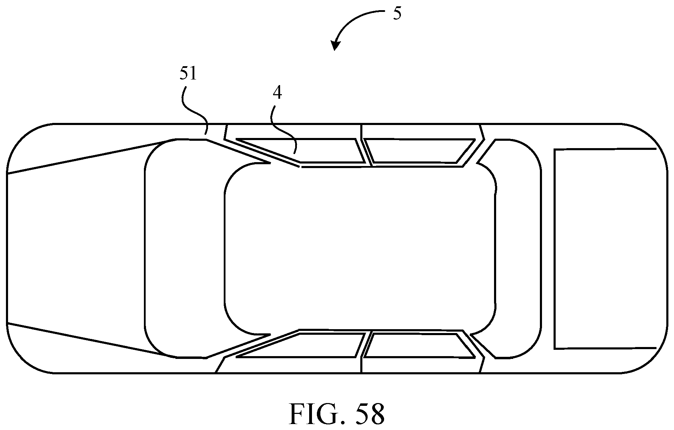

A vehicle 5 is further provided in the present disclosure. As illustrated in FIG. 58, FIG. 58 is a schematic top view of a vehicle provided in implementation (10) of the present disclosure. The vehicle 5 adopts the above light-transmitting assembly 4.

It may be noted that generally, the vehicle 5 further includes a frame 51. The light-transmitting assembly 4 is carried and mounted on the frame 51. Specifically, for the light-transmitting assembly 4, reference may be made to the foregoing description, which is not repeated herein.

Although embodiments of the present disclosure have been illustrated and described above, it can be understood that the above embodiments are exemplary and cannot be understood as limitations to the present disclosure.

## Claims

1. A dimming member (1), wherein the dimming member (1) comprises a dimming film (113), and the dimming film (113) comprises a first substrate (11), a functional layer (12), and a second substrate (13) that are stacked in sequence; and the functional layer (12) is provided with a sealing structure (15) at a periphery of the functional layer (12), and the sealing structure (15) is formed by wrapping the functional layer (12) with the first substrate (11) and the second substrate (13); the dimming member (1) defines at least one groove structure (14) at a periphery of the dimming member (1), the at least one groove structure (14) extends through the functional layer (12), and the sealing structure (15) is disposed at the at least one groove structure (14); and the sealing structure (15) is formed by the first substrate (11) and the second substrate (13) being melted and abutting against each other.

2. The dimming member (1) of claim 1, wherein the first substrate (11) and the second substrate (13) each comprise a substrate body portion (1a) and a substrate edge portion (1b), the functional layer (12) is disposed between the substrate body portion (1a) of the first substrate (11) and the substrate body portion (1a) of the second substrate (13), and the sealing structure (15) is formed by the substrate edge portion (1b) of the first substrate (11) and the substrate edge portion (1b) of the second substrate (13) and configured to wrap the functional layer (12).

3. The dimming member (1) of claim 1 or 2, wherein the functional layer (12) comprises a first conductive layer (121), a dimming layer (122), and a second conductive layer (123) stacked in sequence.

4. The dimming member (1) of claim 1 or 2, wherein the at least one groove structure (14) is filled with a filling portion (111) at one side of the at least one groove structure (14) away from the sealing structure (15).

5. The dimming member (1) of claim 1 or 2, wherein the at least one groove structure (14) is filled by the first substrate (11) and/or the second substrate (13) being melted and contracted towards the functional layer (12).

6. The dimming member of any one of claims 1, 2, 4 or 5, wherein the dimming member (110) comprises a first electrode (111), a second electrode (112), and the dimming film (113), the dimming film (113) comprises the first substrate (1131a), a first conductive layer (1131b), a dimming layer (1133), a second conductive layer (1132b), and the second substrate (1132a) that are stacked in sequence,
the dimming layer (1133), the first conductive layer (1131b), and the second conductive layer (1132b) are comprised in the functional layer and cooperatively define an accommodating space (Z), the first electrode (111) and the second electrode (112) are disposed in the accommodating space (Z), the first electrode (111) is attached to the first conductive layer (1131b) at one side of the first conductive layer (1131b) away from the first substrate (1131a) and is electrically connected to the first conductive layer (1131b), and the second electrode (112) is attached to the second conductive layer (1132b) at one side of the second conductive layer (1132b) away from the second substrate (1132a) and is electrically connected to the second conductive layer (1132b).

7. The dimming member (110) of claim 6, wherein the accommodating space (Z) comprises a first sub-space (Z1) and a second sub-space (Z2) spaced apart from the first sub-space (Z1), the first electrode (111) is disposed in the first sub-space (Z1), and the second electrode (112) is disposed in the second sub-space (Z2).

8. The dimming member (110) of claim 6, wherein the first substrate (1131a) at the sealing structure (M) and the second substrate (1132a) at the sealing structure (M) are connected to each other and fused together.

9. The dimming member (110) of claim 6, wherein an end of the sealing structure (M) away from the second substrate (1132a) is located in the first substrate (1131a), and an end of the sealing structure (M) away from the first substrate (1131a) is located in the second substrate (1132a).

10. The dimming member (110) of claim 6, wherein the dimming member (1, 110) further comprises a first adhesive layer (1134) and a second adhesive layer (1135), the first electrode (111) is adhered to and electrically connected to the first conductive layer (1131b) by the first adhesive layer (1134), and the second electrode (112) is adhered to and electrically connected to the second conductive layer (1132b) by the second adhesive layer (1135).

11. A method of manufacturing a dimming member, comprising:
providing (S100) a dimming film, wherein the dimming film comprises a first film-layer (1131) a dimming player (1133), and a second film-layer (1132) that are stacked, the first film-layer comprises a first substrate (1131a) and a first conductive layer (1131b) that are stacked, the second film-layer comprises a second substrate (1132a) and a second conductive layer (1132b) that are stacked, the dimming layer is disposed between the first conductive layer and the second conductive layer, and the dimming film has a first region (A1) and a second region (A2);
peeling off (S200) the first film-layer in the first region and the second film-layer in the first region in a direction away from each other, to expose the dimming layer in the first region;
removing (S300) at least part of the dimming layer on the first conductive layer in the first region;
attaching (S400) a first electrode (111) to the first conductive layer in the first region;
removing (S500) at least part of the dimming layer on the second conductive layer in the first region;
attaching (S600) a second electrode (112) to the second conductive layer in the first region; and
providing (S710) a first machining member (2) and a second machining member (3);
disposing (S720) the dimming film between the first machining member and the second machining member, wherein the first machining member abuts against the first substrate of the dimming film, and the second machining member abuts against the second substrate of the dimming film; and
forming (S730) a sealing structure (M, 15) at the periphery of the dimming film by cooperation between the first machining member and the second machining member, to obtain the dimming member, wherein the first substrate at the sealing structure and the second substrate at the sealing structure are connected to each other, the dimming member defines at least one groove structure (14) at a periphery of the dimming member, the at least one groove structure extends through the functional layer, comprising the first conductive layer (1131b), the dimming layer (1133) and the second conductive layer (1132b),
and the sealing structure is disposed at the at least one groove structure; and the sealing structure is formed by the first substrate and the second substrate being melted and abutting against each other.

12. The method for manufacturing a dimming member of claim 11, wherein peeling (S200) off the first film-layer in the first region and the second film-layer in the first region in the direction away from each other, to expose the dimming layer in the first region comprises:
cutting (S210) the dimming film in the first region along a first preset path to form a first sub-region;
peeling off (S220) the first film-layer in the first sub-region and the second film-layer in the first sub-region in a direction away from each other, to expose the dimming layer in the first sub-region;
cutting (S230) the dimming film in the first region along a second preset path to form a second sub-region; and
peeling off (S240) the first film-layer in the second sub-region and the second film-layer in the second sub-region in a direction away from each other, to expose the dimming layer in the second sub-region.

13. A light-transmitting assembly (4, 10), comprising a first light-transmitting member (41, 120a), a second light-transmitting member (42, 120b), and the dimming member (1, 110) of any one of claims 1 to 10, wherein the dimming member (1, 110) is disposed between the first light-transmitting member (41, 120a) and the second light-transmitting member (42, 120b).

14. A vehicle (5, 1), comprising the light-transmitting assembly (4, 10) of claim 13.

## Patentansprüche

1. Dimmelement (1), wobei das Dimmelement (1) einen Dimmfilm (113) umfasst und der Dimmfilm (113) ein erstes Subtrat (11), eine Funktionsschicht (12) und ein zweites Substrat (13), die nacheinander aufgestapelt sind, umfasst; und wobei die Funktionsschicht (12) mit einer Dichtungsstruktur (15) an einem Umfang der Funktionsschicht (12) bereitgestellt ist und die Dichtungsstruktur (15) durch Umhüllen der Funktionsschicht (12) mit dem ersten Substrat (11) und dem zweiten Substrat (13) ausgebildet ist; wobei das Dimmelement (1) zumindest eine Nutstruktur (14) an einem Umfang des Dimmelements (1) definiert, die zumindest eine Nutstruktur (14) sich durch die Funktionsschicht (12) hindurch erstreckt und die Dichtungsstruktur (15) an der zumindest einen Nutstruktur (14) angeordnet ist; und wobei die Dichtungsstruktur (15) durch das erste Substrat (11) und das zweite Substrat (13), die geschmolzen sind und aneinander anliegen, ausgebildet ist.

2. Dimmelement (1) nach Anspruch 1, wobei das erste Substrat (11) und das zweite Substrat (13) jeweils einen Substratkörperabschnitt (1a) und einen Substratrandabschnitt (1b) umfassen; wobei die Funktionsschicht (12) zwischen dem Substratkörperabschnitt (1a) des ersten Substrats (11) und dem Substratkörperabschnitt (1a) des zweiten Substrats (13) angeordnet ist und die Dichtungsstruktur (15) durch den Substratrandabschnitt (1b) des ersten Substrats (11) und den Substratrandabschnitt (1b) des zweiten Substrats (13) ausgebildet ist und dazu ausgelegt ist, die Funktionsschicht (12) zu umhüllen.

3. Dimmelement (1) nach Anspruch 1 oder 2, wobei die Funktionsschicht (12) eine erste leitfähige Schicht (121), eine Dimmschicht (122) und eine zweite leitfähige Schicht (123), die nacheinander aufgestapelt sind, umfasst.

4. Dimmelement (1) nach Anspruch 1 oder 2, wobei die zumindest eine Nutstruktur (14) mit einem Füllabschnitt (111) auf einer Seite der zumindest einen Nutstruktur (14) weg von der Dichtungsstruktur (15) befüllt ist.

5. Dimmelement (1) nach Anspruch 1 oder 2, wobei die zumindest eine Nutstruktur (14) durch das erste Substrat (11) und/oder das zweite Substrat (13) gefüllt ist, die geschmolzen und in Richtung der Funktionsschicht (12) eingeengt sind.

6. Dimmelement nach einem der Ansprüche 1, 2, 3, 4 oder 5, wobei das Dimmelement (110) eine erste Elektrode (111), eine zweite Elektrode (112) und den Dimmfilm (113) umfasst, wobei der Dimmfilm (113) das erste Substrat (1131a), eine erste leitfähige Schicht (1131b), eine Dimmschicht (1133), eine zweite leitfähige Schicht (1132b) und das zweite Substrat (1132a), die nacheinander aufgestapelt sind, umfasst, wobei die Dimmschicht (1133), die erste leitfähige Schicht (1131b) und die zweite leitfähige Schicht (1132b) in der Funktionsschicht enthalten sind und zusammenwirkend einen Aufnahmeraum (Z) definieren, wobei die erste Elektrode (111) und die zweite Elektrode (112) in dem Aufnahmeraum (Z) angeordnet sind, wobei die erste Elektrode (111) auf der ersten leitfähigen Schicht (1131b) auf einer Seite der ersten leitfähigen Schicht (1131b) weg von dem ersten Substrat (1131a) angebracht und elektrisch mit der ersten leitfähigen Schicht (1121b) verbunden ist und die zweite Elektrode (112) auf der zweiten leitfähigen Schicht (1132b) auf einer Seite der zweiten leitfähigen Schicht (1132b) weg von dem zweiten Substrat (1132a) angebracht und elektrisch mit der zweiten leitfähigen Schicht (1132b) verbunden ist.

7. Dimmelement (110) nach Anspruch 6, wobei der Aufnahmeraum (Z) einen ersten Teilraum (Z1) und einen zweiten Teilraum (Z2), der von dem ersten Teilraum (Z1) beabstandet ist, umfasst, wobei die erste Elektrode (111) in dem ersten Teilraum (Z1) angeordnet ist und die zweite Elektrode (112) in dem zweiten Teilraum (Z2) angeordnet ist.

8. Dimmelement (110) nach Anspruch 6, wobei das erste Substrat (1131a) an der Dichtungsstruktur (M) und das zweite Substrat (1132a) an der Dichtungsstruktur (M) miteinander verbunden und verschmolzen sind.

9. Dimmelement (110) nach Anspruch 6, wobei ein Ende der Dichtungsstruktur (M) weg von dem zweiten Substrat (1132a) in dem ersten Substrat (1131a) angeordnet ist und ein Ende der Dichtungsstruktur (M) weg von dem ersten Substrat (1131a) in dem zweiten Substrat (1132a) angeordnet ist.

10. Dimmelement (110) nach Anspruch 6, wobei das Dimmelement (1, 110) ferner eine erste Haftschicht (1134) und eine zweite Haftschicht (1135) umfasst, wobei die erste Elektrode (111) durch die erste Haftschicht (1134) an der ersten leitfähigen Schicht (1131b) anhaftet und mit dieser elektrisch verbunden ist und die zweite Elektrode (112) durch die zweite Haftschicht (1134) an der zweiten leitfähigen Schicht (1132b) anhaftet und mit dieser elektrisch verbunden ist.

11. Verfahren zur Herstellung eines Dimmelements, umfassend:
Bereitstellen (S100) eines Dimmfilms, wobei der Dimmfilm eine erste Filmschicht (1131), eine Dimmschicht (1133) und eine zweite Filmschicht (1132), die aufgestapelt sind, umfasst, wobei die erste Filmschicht ein erstes Substrat (1131a) und eine erste leitfähige Schicht (1131b), die aufgestapelt sind, umfasst, die zweite Filmschicht ein zweites Substrat (1132a) und eine zweite leitfähige Schicht (1132b), die gestapelt sind, umfasst, die Dimmschicht zwischen der ersten leitfähigen Schicht und der zweiten leitfähigen Schicht angeordnet ist und der Dimmfilm eine erste Region (A1) und eine zweite Region (A2) aufweist;
Abziehen (S200) der ersten Filmschicht in der ersten Region und der zweiten Filmschicht in der ersten Region in einer Richtung weg voneinander, um die Dimmschicht in der ersten Region freizulegen;
Entfernen (S300) von zumindest einem Teil der Dimmschicht auf der ersten leitfähigen Schicht in der ersten Region;
Anbringen (S400) einer ersten Elektrode (111) auf der ersten leitfähigen Schicht in der ersten Region;
Entfernen (S500) von zumindest einem Teil der Dimmschicht auf der zweiten leitfähigen Schicht in der ersten Region;
Anbringen (S600) einer zweiten Elektrode (112) auf der zweiten leitfähigen Schicht in der ersten Region; und
Bereitstellen (S710) eines ersten Maschinenbearbeitungselements (2) und eines zweiten Maschinenbearbeitungselements (3);
Anordnen (S720) des Dimmfilms zwischen dem ersten Maschinenbearbeitungselement und dem zweiten Maschinenbearbeitungselement, wobei das erste Maschinenbearbeitungselement an dem ersten Substrat des Dimmfilms anliegt und das zweite Maschinenbearbeitungselement an dem zweiten Substrat des Dimmfilms anliegt; und
Ausbilden (S730) einer Dichtungsstruktur (M, 15) an dem Umfang des Dimmfilms durch Zusammenwirken des ersten Maschinenbearbeitungselements und des zweiten Maschinenbearbeitungselements, um das Dimmelement zu erhalten, wobei das erste Substrat an der Dichtungsstruktur und das zweite Substrat an der Dichtungsstruktur miteinander verbunden sind, wobei das Dimmelement zumindest eine Nutstruktur (14) an einem Umfang des Dimmelements definiert, die zumindest eine Nutstruktur sich durch die Funktionsschicht, welche die erste leitfähige Schicht (1131b), die Dimmschicht (1133) und die zweite leitfähige Schicht (1132b) umfasst, hindurch erstreckt, und die Dichtungsstruktur an der zumindest einen Nutstruktur angeordnet ist; und wobei die Dichtungsstruktur durch das erste Substrat und das zweite Substrat , die geschmolzen sind und aneinander anliegen, ausgebildet ist.

12. Verfahren zur Herstellung eines Dimmelements nach Anspruch 11, wobei das Abziehen (S200) der ersten Filmschicht in der ersten Region und der zweiten Filmschicht in der ersten Region in einer Richtung voneinander weg, um die Dimmschicht in der ersten Region freizulegen, Folgendes umfasst:
Schneiden (S210) des Dimmfilms in der ersten Region entlang eines ersten voreingestellten Pfads, um eine erste Teilregion auszubilden;
Abziehen (S220) der ersten Filmschicht in der ersten Teilregion und der zweiten Filmschicht in der ersten Teilregion in einer Richtung voneinander weg, um die Dimmschicht in der ersten Teilregion freizulegen;
Schneiden (S230) des Dimmfilms in der ersten Region entlang eines zweiten voreingestellten Pfads, um eine zweite Teilregion auszubilden; und
Abziehen (S240) der ersten Filmschicht in der zweiten Teilregion und der zweiten Filmschicht in der zweiten Teilregion in einer Richtung weg voneinander, um die Dimmschicht in der zweiten Teilregion freizulegen.

13. Lichtdurchlässige Anordnung (4, 10), umfassend ein erstes lichtdurchlässiges Element (41, 120a), ein zweites lichtdurchlässiges Element (42, 120b) und ein Dimmelement (1, 110) nach einem der Ansprüche 1 bis 10, wobei das Dimmelement (1, 110) zwischen dem ersten lichtdurchlässigen Element (41, 120a) und dem zweiten lichtdurchlässigen Element (42, 120b) angeordnet ist.

14. Fahrzeug (5, 1), umfassend eine lichtdurchlässige Anordnung (4, 10) nach Anspruch 13.

## Revendications

1. Élément de gradation (1), dans lequel l'élément de gradation (1) comprend un film de gradation (113), et le film de gradation (113) comprend un premier substrat (11), une couche fonctionnelle (12), et un second substrat (13) qui sont empilés en séquence ; et la couche fonctionnelle (12) est pourvue d'une structure d'étanchéité (15) au niveau d'une périphérie de la couche fonctionnelle (12), et la structure d'étanchéité (15) est formée en enveloppant la couche fonctionnelle (12) avec le premier substrat (11) et le second substrat (13) ; l'élément de gradation (1) définit au moins une structure de rainure (14) au niveau d'une périphérie de l'élément de gradation (1), la au moins une structure de rainure (14) s'étend à travers la couche fonctionnelle (12), et la structure d'étanchéité (15) est disposée au niveau de la au moins une structure de rainure (14) ; et la structure d'étanchéité (15) est formée par le premier substrat (11) et le second substrat (13) étant fusionnés et venant en butée l'un contre l'autre.

2. Élément de gradation (1) selon la revendication 1, dans lequel le premier substrat (11) et le second substrat (13) comprennent chacun une partie de corps de substrat (1a) et une partie de bord de substrat (1b), la couche fonctionnelle (12) est disposée entre la partie de corps de substrat (1a) du premier substrat (11) et la partie de corps de substrat (1a) du second substrat (13), et la structure d'étanchéité (15) est formée par la partie de bord de substrat (1b) du premier substrat (11) et la partie de bord de substrat (1b) du second substrat (13) et configurée pour envelopper la couche fonctionnelle (12).

3. Élément de gradation (1) selon la revendication 1 ou 2, dans lequel la couche fonctionnelle (12) comprend une première couche conductrice (121), une couche de gradation (122) et une seconde couche conductrice (123) empilées en séquence.

4. Élément de gradation (1) selon la revendication 1 ou 2, dans lequel la au moins une structure de rainure (14) est remplie d'une partie de remplissage (111) au niveau d'un côté de la au moins une structure de rainure (14) à l'opposé de la structure d'étanchéité (15).

5. Élément de gradation (1) selon la revendication 1 ou 2, dans lequel la au moins une structure de rainure (14) est remplie par le premier substrat (11) et/ou le second substrat (13) fusionné(s) et contracté(s) vers la couche fonctionnelle (12).

6. Élément de gradation selon l'une quelconque des revendications 1, 2, 4 ou 5, dans lequel l'élément de gradation (110) comprend une première électrode (111), une seconde électrode (112) et le film de gradation (113), le film de gradation (113) comprend le premier substrat (1131a), une première couche conductrice (1131b), une couche de gradation (1133), une seconde couche conductrice (1132b) et le second substrat (1132a) qui sont empilés en séquence, la couche de gradation (1133), la première couche conductrice (1131b) et la seconde couche conductrice (1132b) sont comprises dans la couche fonctionnelle et définissent en coopération un espace de réception (Z), la première électrode (111) et la seconde électrode (112) sont disposées dans l'espace de réception (Z), la première électrode (111) est fixée à la première couche conductrice (1131b) au niveau d'un côté de la première couche conductrice (1131b) à l'opposé du premier substrat (1131a) et est connectée électriquement à la première couche conductrice (1131b), et la seconde électrode (112) est fixée à la seconde couche conductrice (1132b) au niveau d'un côté de la seconde couche conductrice (1132b) à l'opposé du second substrat (1132a) et est connectée électriquement à la seconde couche conductrice (1132b).

7. Élément de gradation (110) selon la revendication 6, dans lequel l'espace de réception (Z) comprend un premier sous-espace (Z1) et un second sous-espace (Z2) espacé du premier sous-espace (Z1), la première électrode (111) est disposée dans le premier sous-espace (Z1), et la seconde électrode (112) est disposée dans le second sous-espace (Z2).

8. Élément de gradation (110) selon la revendication 6, dans lequel le premier substrat (1131a) au niveau de la structure d'étanchéité (M) et le second substrat (1132a) au niveau de la structure d'étanchéité (M) sont reliés l'un à l'autre et fusionnés ensemble.

9. Élément de gradation (110) selon la revendication 6, dans lequel une extrémité de la structure d'étanchéité (M) éloignée du second substrat (1132a) est située dans le premier substrat (1131a), et une extrémité de la structure d'étanchéité (M) éloignée du premier substrat (1131a) est située dans le second substrat (1132a).

10. Élément de gradation (110) selon la revendication 6, dans lequel l'élément de gradation (1, 110) comprend en outre une première couche adhésive (1134) et une seconde couche adhésive (1135), la première électrode (111) est mise en adhérence et connectée électriquement à la première couche conductrice (1131b) par la première couche adhésive (1134), et la seconde électrode (112) est mise en adhérence et connectée électriquement à la seconde couche conductrice (1132b) par la seconde couche adhésive (1135).

11. Procédé de fabrication d'un élément de gradation, comprenant les étapes consistant à :
fournir (S100) un film de gradation, dans lequel le film de gradation comprend une première couche de film (1131), une couche de gradation (1133) et une seconde couche de film (1132) qui sont empilées, la première couche de film comprend un premier substrat (1131a) et une première couche conductrice (1131b) qui sont empilées, la seconde couche de film comprend un second substrat (1132a) et une seconde couche conductrice (1132b) qui sont empilées, la couche de gradation est disposée entre la première couche conductrice et la seconde couche conductrice, et le film de gradation présente une première région (A1) et une seconde région (A2) ;
décoller (S200) la première couche de film dans la première région et la seconde couche de film dans la première région dans des directions opposées l'une à l'autre, pour exposer la couche de gradation dans la première région ;
retirer (S300) au moins une partie de la couche de gradation sur la première couche conductrice dans la première région ;
fixer (S400) une première électrode (111) à la première couche conductrice dans la première région ;
retirer (S500) au moins une partie de la couche de gradation sur la seconde couche conductrice dans la première région ;
fixer (S600) une seconde électrode (112) à la seconde couche conductrice dans la première région ; et
fournir (S710) un premier élément d'usinage (2) et un second élément d'usinage (3) ;
disposer (S720) le film de gradation entre le premier élément d'usinage et le second élément d'usinage, dans lequel le premier élément d'usinage vient en butée contre le premier substrat du film de gradation, et le second élément d'usinage vient en butée contre le second substrat du film de gradation ; et
former (S730) une structure d'étanchéité (M, 15) au niveau de la périphérie du film de gradation par coopération entre le premier élément d'usinage et le second élément d'usinage, pour obtenir l'élément de gradation, dans lequel le premier substrat au niveau de la structure d'étanchéité et le second substrat au niveau de la structure d'étanchéité sont reliés l'un à l'autre, l'élément de gradation définit au moins une structure de rainure (14) au niveau d'une périphérie de l'élément de gradation, la au moins une structure de rainure s'étend à travers la couche fonctionnelle, comprenant la première couche conductrice (1131b), la couche de gradation (1133) et la seconde couche conductrice (1132b), et la structure d'étanchéité est disposée au niveau de la au moins une structure de rainure ; et la structure d'étanchéité est formée par le premier substrat et le second substrat étant fusionnés et venant en butée l'un contre l'autre.

12. Procédé de fabrication d'un élément de gradation selon la revendication 11, dans lequel le décollage (S200) de la première couche de film dans la première région et de la seconde couche de film dans la première région dans des direction opposées l'une à l'autre, pour exposer la couche de gradation dans la première région, comprend les étapes consistant à :
découper (S210) le film de gradation dans la première région le long d'un premier trajet prédéfini pour former une première sous-région ;
décoller (S220) la première couche de film dans la première sous-région et la seconde couche de film dans la première sous-région dans des directions opposées l'une à l'autre, pour exposer la couche de gradation dans la première sous-région ;
découper (S230) le film de gradation dans la première région le long d'un second trajet prédéfini pour former une seconde sous-région ; et
décoller (S240) la première couche de film dans la seconde sous-région et la seconde couche de film dans la seconde sous-région dans des directions opposées l'une à l'autre, pour exposer la couche de gradation dans la seconde sous-région.

13. Ensemble de transmission de lumière (4, 10), comprenant un premier élément de transmission de lumière (41, 120a), un second élément de transmission de lumière (42, 120b), et l'élément de gradation (1, 110) selon l'une quelconque des revendications 1 à 10, dans lequel l'élément de gradation (1, 110) est disposé entre le premier élément de transmission de lumière (41, 120a) et le second élément de transmission de lumière (42, 120b).

14. Véhicule (5, 1), comprenant l'ensemble de transmission de lumière (4, 10) selon la revendication 13.
